# EUROPEAN PATENT SPECIFICATION

(11) **EP 3 618 391 B1**
(45) Date of publication and mention of the grant of the patent: **05.03.2025**
(21) Application number: 18790754.8
(22) Date of filing: 13.03.2018
(51) Int. Cl.: H04L 67/51, H04L 67/63, H04W 4/44, H04W 40/22, H04W 48/08, H04W 76/00, H04W 4/80, H04W 28/02, H04W 40/12, H04W 88/04, H04W 8/00

(54) **RELAY DISCOVERY METHODS**
RELAISENTDECKUNGSVERFAHREN
PROCÉDÉS DE DÉCOUVERTE DE RELAIS

(30) Priority: 28.04.2017 CN 201710295216
(43) Date of publication of application: 04.03.2020
(73) Proprietor: ZTE Corporation, Shenzhen, Guangdong 518057 (CN)
(72) Inventor: HUANG, Ying, Shenzhen Guangdong 518057 (CN); CHEN, Lin, Shenzhen Guangdong 518057 (CN); MA, Zijiang, Shenzhen Guangdong 518057 (CN)
(74) Representative: Regimbeau
(86) International application number: PCT/CN2018/078894
(87) International publication number: WO 2018/196497

(56) References cited:
- EP-A1- 3 282 719
- WO-A1-2015/115870
- WO-A1-2016/160278
- WO-A1-2016/161867
- WO-A1-2016/164808
- WO-A1-2016/164808
- WO-A1-2016/181547
- WO-A1-2016/182597
- WO-A1-2017/055157
- ERICSSON: "Measurements, Signaling, and Selection Rules for Relay Discovery", vol. RAN WG1, no. Belgrade, Serbia; 20150420 - 20150424, 10 April 2015 (2015-04-10), XP050949631, Retrieved from the Internet <URL:http://www.3gpp.org/ftp/tsg_ran/WG1_RL1/TSGR1_80b/Docs/> [retrieved on 20150410]
- ASUSTEK: "Discussion on Relay selection/re-selection", vol. RAN WG2, no. Fukuoka, Japan; 20150525 - 20150529, 24 May 2015 (2015-05-24), XP050971551, Retrieved from the Internet <URL:http://www.3gpp.org/ftp/Meetings_3GPP_SYNC/RAN2/Docs/> [retrieved on 20150524]
- SAMSUNG: "Clarification on definition of Announcer/Discoverer/Discoveree/Target info", vol. SA WG2, no. Dubrovnik, Croatia; 20150706 - 20150710, 30 June 2015 (2015-06-30), XP050987296, Retrieved from the Internet <URL:http://www.3gpp.org/ftp/tsg_sa/WG2_Arch/TSGS2_110_Dubrovnik/Docs/> [retrieved on 20150630]

## Description

### TECHNICAL FIELD

The present disclosure relates to the field of wireless communication technologies and, in particular, relates to relay discovery methods.

### BACKGROUND

With the development of wireless multimedia services, people's demand for high data rates and user experience is increasing, which puts high requirements for the system capacity and coverage of traditional cellular networks. The popularity of application of social networks, close-range data sharing, and local advertising has led to an increasing demand of people for understanding and communicating with other people or things of interest nearby. Conventional cell-based cellular networks have significant limitations in supporting high data rates and proximity services. Under this background, the device to device (D2D) technology representing a new direction for future communication technologies has emerged. The application of the D2D technology may reduce the burden of the cellular network, reduce the battery power consumption of a user equipment (UE), increase a data rate, and improve the robustness of network infrastructure, which well satisfies the requirements of high data rate services and proximity services.

With an increase of vehicles, how to reduce traffic accidents and how to provide timely rescue and on-site coordination after traffic accidents are problems to be solved in the existing traffic. With the development of communication technologies and electronic technologies, it has become a new way for many countries to try to solve the problem of road traffic safety by providing vehicle-mounted devices on vehicles for performing various interactions of information such as accident warning information and traffic situation prompt information. Optionally, a communication-based collision warning system adopts advanced wireless communication technologies and a new generation of information processing technologies to implement real-time information interactions between vehicles and between vehicles and roadside infrastructure, inform each other of the current status (including the position, speed, acceleration and traveling path of the vehicle), acquire the road environment information, cooperatively sense and acquire road hazard situations, and provide various collision warning information in time to prevent road traffic accidents.

The 3rd Generation Partnership Project (3GPP) is discussing Vehicle-to-Everything Communications (V2X) based on Long Term Evolution (LTE). The D2D technology may be used in V2X communication, that is, vehicle information is provided by means of sensors, vehicle-mounted terminals and electronic tags mounted on vehicles, various communication technologies are used to implement communication technologies including Vehicle-to-Vehicle (V2V) Communication, Vehicle-to-Pedestrian (V2P) Communications, Vehicle-to-Infrastructure/Network (V2I/V2N) Communications, and information is effectively used such as being extracted and shared on an information network platform. In this way, the vehicles are managed and controlled effectively and are provided with comprehensive services.

However, the transmission ranges of V2V, V2P, V2I, V2N and V2X are limited, and transmission of information cannot be effectively achieved if information transmission requiring large-range sharing, for example, when traffic accidents occur, so how to timely and effectively transmit shared information in a larger range is a problem to be solved in the existing art.

The document WO2016164808A1 discloses systems, methods, and instrumentalities for a WTRU to act as a mobile relay. The document R1-151767 discloses a system level overview of UE-NW relaying and Service Continuity Scenarios. The document WO2017055157A1 discloses a method of relaying a terminal-to-terminal communication in a mobile telecommunication system. The document WO 2016161867A1 discloses a method for determining a device-to-device (D2D) relay node. The document R2-152402 discloses some progress related to Relay UE selection.

### SUMMARY

The invention is set out in the appended set of claims.

### BRIEF DESCRIPTION OF DRAWINGS

FIG. 1 is a schematic diagram of a V2X communication network corresponding to scenario one according to an embodiment of the present disclosure;
FIG. 2 is a schematic diagram of a V2X communication network corresponding to scenario two according to an embodiment of the present disclosure;
FIG. 3 is a schematic diagram of a V2X communication network corresponding to scenario three according to an embodiment of the present disclosure;
FIG. 4 is a schematic diagram of another V2X communication network corresponding to scenario three according to an embodiment of the present disclosure;
FIG. 5 is a schematic diagram of a V2X communication relay forwarding scenario according to an embodiment of the present disclosure;
FIG. 6 is a flowchart of a relay discovery and relay forwarding method according to Embodiment five of the present disclosure;
FIG. 7 is a timing diagram illustrating steps for relay discovery and selection according to Embodiment six of the present disclosure;
FIG. 8 is a timing diagram illustrating steps for relay discovery and selection according to Embodiment seven of the present disclosure;
FIG. 9 is a timing diagram illustrating steps for relay discovery and selection according to Embodiment eight of the present disclosure;
FIG. 10 is a timing diagram illustrating steps for relay discovery and selection according to Embodiment nine of the present disclosure;
FIG. 11 is a schematic diagram of a protocol stack between a source device and a target device for relay forwarding through a relay UE according to Embodiment ten of the present disclosure;
FIG. 12 is a schematic diagram of a protocol stack between a source device and a target device for relay forwarding through a relay UE according to Embodiment eleven of the present disclosure;
FIG. 13 is a schematic diagram of a protocol stack between a source device and a target device for relay forwarding through a relay UE according to Embodiment twelve of the present disclosure;
FIG. 14 is a schematic diagram of a protocol stack between a source device and a target device for relay forwarding through a relay UE according to Embodiment thirteen of the present disclosure;
FIG. 15 is a schematic diagram of a protocol stack between a source device and a target device for relay forwarding through a relay UE according to Embodiment fourteen of the present disclosure; and
FIG. 16 is a schematic diagram of a protocol stack between a source device and a target device for relay forwarding through a relay UE according to Embodiment fifteen of the present disclosure.

### DETAILED DESCRIPTION

The V2I service refers to a service in which a user equipment (UE) and a road side unit (RSU) interact with each other using V2I applications. The RSU is an entity that supports the V2I service, may send V2I service data to a UE that uses a V2I application or, and may also receive the V2I service data from the UE that uses the V2I application. The RSU may be implemented by a base station (eNB) or a UE. An RSU implemented by the eNB is referred to as an eNB type RSU (base station type RSU). An RSU implemented by the UE is referred to as a UE type RSU (terminal type RSU). The V2V service includes a direct interaction of V2V-related application information between UEs, or an interaction of the V2V-related application information between UEs through network infrastructure (e.g., an RSU, an application server, etc.) that supports the V2X service due to a limited range of the direct V2V communication.

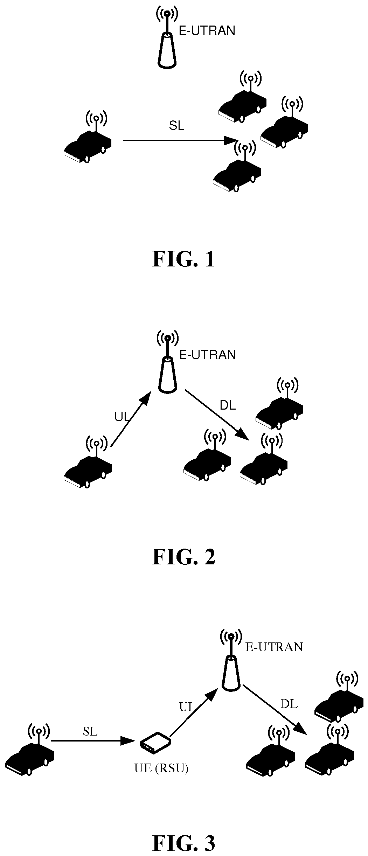

V2V mainly includes three scenarios, as shown in FIGS. 1 to 4.

FIG. 1 is a schematic diagram of a V2X communication network corresponding to scenario one. In scenario one, V2V communication merely based on a PC5 interface is supported. A UE sends a V2X message to a plurality of UEs in a local area through the PC5 interface.

FIG. 2 is a schematic diagram of a V2X communication network corresponding to scenario two. In scenario two, V2V communication merely based on a Uu interface is supported. The UE transmits the V2X message to Evolved Universal Mobile Telecommunication System Terrestrial Radio Access Network (E-UTRAN) in an uplink, and the E-UTRAN broadcasts the V2X message to the plurality of UEs in the local area in a downlink.

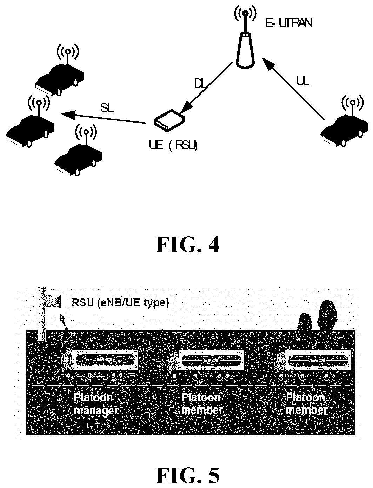

FIG. 3 is a schematic diagram of a V2X communication network corresponding to scenario three. FIG. 4 is a schematic diagram of another V2X communication network corresponding to scenario three. In scenario three, V2V communication using a Uu interface and a PC5 interface is supported. The UE sends a V2X message to other UEs through the PC5 interface, and the RSU receives the V2X message from the PC5 interface and then transmits in the uplink the V2X message to the E-UTRAN.

The E-UTRAN broadcasts in the downlink the V2X message received from the terminal type RSU to the plurality of UEs in the local area. Alternatively, the UE transmits the V2X message to the E-UTRAN in the uplink, the E-UTRAN receives the V2X message through the Uu interface and then transmits the V2X message to one or more terminal type RSUs, and the one or more terminal type RSUs send the V2X message received from the E-UTRAN to the plurality of UEs in the local area through the PC5 interface.

The V2X service scenario mainly includes vehicles placing, advanced driving, extended sensors, and remote driving. In both the vehicles placing scenario and the advanced driving scenario, the UE-to-UE relay or UE-to-RSU relay technology is required, that is, the UE or the RSU serves as a relay for V2X communication, a transmission range of information to be transmitted can be expanded through the relay, and the information to be transmitted can be smoothly sent to a receiving end through a relay node, but how to perform relay transmission may ensure the execution and correct execution of the relay. As shown in FIG. 5, in the vehicles placing scenario, a vehicle UE within a fleet functions as a relay, a vehicle UE within the fleet may communicate with an RSU through the vehicle UE (such as a fleet manager) functioning as the relay in the fleet, and the fleet manager should update peripheral traffic data reported by fleet members in real time and report the peripheral traffic data to the RSU. Meanwhile, the fleet manager should receive an RSU message from the RSU in real time and send the RSU message to the fleet members, where the RSU message includes road situations and long-distance traffic information. In the advanced driving scenario, an RSU functions as a relay, and vehicle UEs interactively share information such as detected information or vehicle driving paths.

In the present disclosure, when the source device or the relay device or the target device is an RSU, the RSU may be a UE type RSU or an eNB type RSU. In the embodiment of the present disclosure, a UE type RSU is taken as an example for description, and a PC5 interface protocol is adopted between a source device and a relay device, between the source device and a target device, and between the relay device and the target device. However, when the source device or the relay device or the target device is an eNB type RSU, the interface thereof with the peer end device is a Uu interface instead of a PC5 interface, that is, in the description of the embodiments and the drawings, PC5 is correspondingly replaced with Uu.

The present disclosure will be further described below in detail with reference to the drawings and embodiments. It is to be understood that specific embodiments described herein are intended to explain the present disclosure, and not to limit the present disclosure.

### Embodiment one

A relay discovery method is provided in the embodiment. In the embodiment, a relay discovery operation is performed on a source device side to discover a relay device. The relay device is discovered and the relay device is configured to forward a data packet of a source device to a target device. The number of target devices may be one or more. In the embodiment, the relay device is configured to forward the data packet provided by the source device to the target device. The relay discovery method may be executed on the source device side and may also be executed on the relay device side.

**In** the embodiment, each of the source device, the relay device, and the target device is a UE or an RSU.

**In** the embodiment, after the relay discovery operation is performed, if a plurality of optional devices are discovered, one or more relay devices are selected from the plurality of optional devices, and the selected relay device is used as a relay device for relaying and forwarding for the source device. Optionally, the selection operation may be automatically performed by the source device or may be assisted by a network side network element.

The step in which one or more relay devices are selected from the plurality of optional devices may include at least one of the following.

According to information about a first transmission link between the source device and an optional device, one or more relay devices are selected from the optional devices with higher transmission link quality preferentially, for example, the optional devices with higher transmission stability and larger transmission bandwidth are preferentially selected as the relay devices.

According to information about a second transmission link between the target device and the optional device, one or more relay devices are selected from the optional devices with higher transmission link quality first. The second link information may be measured by the optional device itself; the information about the second transmission link may be forwarded by the optional device to the source device or the network side network element for the source device or the network side network element to select the relay device.

The information about the first transmission link and/or the information about the second transmission link may be characterized by reference signal receiving power (RSRP) measurement values.

For example, a relay discovery operation is performed on the optional devices, and broadcast relay information is sent in a broadcast manner, where the broadcast relay information may carry a load rate of the optional device or the number of resources available for performing relay forwarding, and the like, and a source device or a target device that receives the relay information may select one or more relay devices from a plurality of optional devices according to the relay information. In some embodiments, the optional device that can be used as a relay device determines whether itself can be used as the relay device according to situation information about the optional device itself, and if the optional device can be used as the relay device, broadcast relay information is sent, for example, the load rate of the optional device itself is lower than a preset value, and then it is determined that the optional device can be used as the relay device, and according to a historical processing situation of the optional device itself, it is expected that the load rate of the optional device itself will be lower than the preset value in the next time window, and then it is determined that the optional device itself can be used as the relay device. For another example, the device may determine whether the device itself can be used as the relay device according to configuration of the device itself, if the device can be used as the relay device, the broadcast relay information is sent, and if the device is prohibited from being used as the relay device, the broadcast relay information is not sent, and then the source device will not receive the relay broadcast information and the source device will not select a device whose own configuration does not allow the device to be used as the relay device for information relay transmission.

Data packets sent by the source device to the target device may be classified into multiple importance levels.

The method further includes the following steps: the relay device is selected according to the importance level, for example, one device may need to be used as a relay device for multiple transmissions, and if the same device is selected as the relay device, congestion may occur, and at this time, a relay node with better transmission link quality is selected with high priority according to the importance level and in combination with parameters such as load rates of optional devices.

In some other embodiments, one or more relay devices are selected according to the importance level, and if some data packets are emergency data packets of high importance, multiple relay devices may be selected to perform relaying together, so as to avoid the problems of transmission failure due to a single relay device or transmission failure caused by slow transmission and large transmission delay.

In the embodiment, the step of performing the relay discovery operation includes: performing a Model A relay discovery operation or performing a Model B relay discovery operation.

The Model A relay discovery operation includes: monitoring the relay broadcast information broadcasted by the relay device. The relay broadcast information carries relevant information about the relay device, so that the source device may be considered to find the relay device when the source device receives the relay broadcast message.

The relay broadcast message includes at least one of: information about a relay type, information about a layer 2 identifier of the relay device, information about an RSU of the relay device, information about a UE of the relay device, an identifier of a group to which the relay device belongs, information about a UE established a PC5 connection with the relay device, information about an RSU connected to the relay device, or quality information about a PC5 link between the relay device and the RSU connected to the relay device.

The information about the relay type includes: UE-to-UE relay, UE-to-RSU relay, UE-to-network relay, UE type relay, RSU type relay, layer 2 relay or layer 3 relay. The information about the UE includes a layer 2 identifier or application layer user information. The information about the RSU includes at least one of: an RSU identifier, an RSU type, or a service identifier or type provided by the RSU. The quality information about the PC5 link is a reference signal receiving power (RSRP) measurement value of a PC5 interface between the relay device and the RSU connected to the relay device.

The Model B relay discovery operation includes: broadcasting a relay solicitation message, and receiving a relay response message sent by the relay device. The relay solicitation message is used for soliciting that the relay device become a relay device for relay forwarding for the source device. The relay response message is used for the relay device to answer the source device, and indicates that relay forwarding can be performed for the source device.

The relay solicitation message includes at least one of: a layer 2 identifier of the source device, a solicited relay type, information about an RSU of a relay device desired to be discovered (that is, a relay device desired to be discovered is an RSU), information about a UE of the relay device desired to be discovered (that is, a relay device desired to be discovered is a UE), information about a target group desired to be discovered, information about a target RSU (target device), information about a target UE (target device), a solicited service identifier, a solicited service type, or information about solicited Quality of Service (QoS). The target group is formed by multiple devices. The information about the target group is a group identifier of the target group. The source device and the relay device may belong to the same target group, that is, the source device and the relay device have the same group identifier.

The relay response message includes at least one of: a layer 2 identifier of the relay device, information about an RSU of the relay device, an identifier of a group to which the relay device belongs, a relay type, information about a UE established a PC5 connection with the relay device, information about an RSU connected to the relay device, quality information about a PC5 link between the relay device and the target RSU, or quality information about a PC5 link between the relay device and the target UE.

Optionally, before the relay discovery operation is performed, the method further includes: receiving relay discovery assistance information sent by a network side network element. The relay discovery assistance information includes relevant information about the relay device provided by the network side network element to the source device.

The relay discovery assistance information includes at least one of: information about a relay discovery model, information about an RSU of the relay device, information about a UE of the relay device, an identifier of a group to which the relay device belongs, information about a PC5 resource used for relay discovery, or information about a PC5 resource used for communicating with the relay device. The information about the relay discovery model includes: Model A and/or Model B.

Optionally, before the relay discovery assistance information sent by the network side network element is received, the method further includes: sending relay discovery solicitation information to the network side network element. The relay discovery solicitation information is used for soliciting that the network side network element assists the source device in performing the relay discovery operation. The network side network element may determine the relevant information of the relay device required by the source device according to the relay discovery solicitation information, and further provides the relevant information about the required relay device for the source device.

The relay discovery solicitation information includes at least one of: information about a position where the source device is located, relay discovery indication information, information about a solicited relay type, a solicited service identifier, a solicited service type, information about solicited QoS, information about a target RSU, information about a target UE, or information about a target group.

The information about the position where the source device is located includes at least one of: a cell identifier, a zone identifier, or geographical position information.

Optionally, after the relay discovery operation is performed, the method further includes: performing a relay selection operation to select a relay device for relaying and forwarding for the source device, or receiving information about a selected relay device by a network side network element for the source device.

The information about the selected relay device by the network side network element for the source device includes at least one of: a layer 2 identifier of the relay device, user information of the relay device, an RSU identifier of the relay device, a discovery identifier of the relay device, or a group identifier of the relay device.

The network side network element includes a base station, a mobility management entity (MME), a Vehicle-to-Everything Communications (V2X) functional entity, a V2X server or an application server.

Optionally, the step of performing the relay selection operation includes: if a plurality of relay devices are discovered after the relay discovery operation is performed, selecting one of the plurality of relay devices, where the selected relay device meets at least one of the following conditions: a quality of a PC5 link between the source device and the relay device is higher than a first threshold value, and the first threshold value is configured by a network side network element or pre-configured; and/or a PC5 connection has been established between the relay device and a target RSU and/or a target UE of the source device; and/or the relay device is a member of a target group of the source device. Optionally, in condition that a plurality of relay devices meeting the conditions exist, a relay device having a highest quality of a PC5 link between the relay device and the source device is selected.

Optionally, before the information about the selected relay device by the network side network element for the source device is received, the method further includes: sending relay selection solicitation information to the network side network element. The relay selection solicitation information is used for soliciting the network side network element to select a relay device for the source device, and the network side network element selects a relay device suitable for relay forwarding for the source device for the source device according to information carried in the relay selection solicitation information.

The relay selection solicitation information includes at least one of: information about a position where the source device is located, a relay solicitation indication, a solicited relay type, a solicited service identifier, a solicited service type, information about solicited QoS, information about a target RSU, information about a target UE, information about a target group, information about an RSU of a discovered relay device, information about a UE of the discovered relay device, or quality information about a PC5 link between the source device and each discovered relay device.

Optionally, before the relay selection operation is performed to select the relay device or the information about the selected relay device by the network side network element for the source device is received, the method further includes: receiving relay selection configuration information sent by the network side network element. The relay selection configuration information is used for a source device to select the relay device performing relay forwarding for the source device.

The relay selection configuration information includes at least one of: a PC5 link quality threshold value, a relay selection model, or reporting indication information. The relay selection model includes at least one of: UE autonomous selection or base station assisted selection; and the reporting indication information is used for indicating whether a UE sends relay selection solicitation information.

### Embodiment two

The embodiment provides a relay discovery method. In the method, a relay discovery operation may be performed on a relay device side so that a data packet sent by a source device to a target device is forwarded. That is, a relay device is configured to forward the data packet provided by the source device to the target device. Each of the source device, the relay device, and the target device is a UE or an RSU.

In the embodiment, the device initialized as the relay device or the device designated as the relay device may not necessarily perform relay forwarding for the source device, but may perform relay forwarding for the source device only if the relay device becomes the relay device for relay forwarding for the source device after the relay selection operation is performed.

Optionally, before the relay discovery operation is performed, the method further includes: performing a relay initialization operation.

The step of performing the relay initialization operation includes: in condition that a quality of a PC5 link between a local device (relay device as the execution body) and an RSU is higher than a preset second threshold value, initializing the local device as a relay device, where the second threshold value is configured by a network side network element or preconfigured; or if a quality of a PC5 link between the local device and the target device of the source device is higher than a preset third threshold value, initializing the local device as the relay device, where the third threshold value is configured by the network side network element or preconfigured. Optionally, the step of performing the relay initialization operation further includes: monitoring relay pre-broadcast information broadcasted by another device, where the relay pre-broadcast information includes a relay willingness indication and/or a random value.

Optionally, after the relay pre-broadcast information broadcasted by another device is monitored, the method further includes: if the relay pre-broadcast information broadcasted by another device is not monitored, a local device broadcasts relay pre-broadcast information, or that if the relay pre-broadcast information broadcasted by another device is monitored, the local device does not broadcast the relay pre-broadcast information.

Optionally, after the relay pre-broadcast information is broadcasted, the method further includes: if a random value in the relay pre-broadcast information broadcasted by the local device is larger than a random value in the relay pre-broadcast information broadcasted by another device, determining to be initialized as a relay device.

In the embodiment, the step of performing the relay discovery operation includes: performing a Model A relay discovery operation or performing a Model B relay discovery operation.

The Model A relay discovery operation includes: broadcasting relay broadcast information.

The relay broadcast message includes at least one of: information about a relay type, information about a layer 2 identifier of a relay device, information about an RSU of the relay device, information about a UE of the relay device, an identifier of a group to which the relay device belongs, information about a UE established a PC5 connection with the relay device, information about an RSU connected to the relay device, or quality information about a PC5 link between the relay device and the RSU connected to the relay device.

The information about the relay type includes: UE-to-UE relay, UE-to-RSU relay, UE-to-network relay, UE type relay, RSU type relay, layer 2 relay or layer 3 relay. The information about the UE includes a layer 2 identifier or application layer user information. The information about the RSU includes at least one of: a service identifier or type provided by the RSU, an RSU identifier, or an RSU type; the quality information about the PC5 link is an RSRP measurement value of a PC5 interface between the relay device and the RSU connected to the relay device.

The Model B relay discovery operation includes: receiving relay solicitation information broadcasted by the source device, and sending relay response information to the source device.

The relay solicitation information includes at least one of: information about a layer 2 identifier of the source device, a relay type solicited by the source device, information about an RSU of a relay device that the source device desires to discover, information about a UE of the relay device that the source device desires to discover, information about a target group, information about a target RSU, information about a target UE, a service identifier solicited by the source device, a service type solicited by the source device, or information about QoS solicited by the source device.

A relay response message includes at least one of: a layer 2 identifier of a local device, information about an RSU of the local device, an identifier of a group to which the local device belongs, a relay type, information about a UE established a PC5 connection with the local device, information about an RSU connected to the local device, quality information about a PC5 link between the local device and the target RSU, or quality information about a PC5 link between the local device and the target UE.

Optionally, the step of sending the relay response information to the source device includes: if a quality of a PC5 link between the local device and the target device is higher than a preset fourth threshold value, sending the relay response information to the source device.

### Embodiment three

The embodiment provides a relay forwarding method executed on a source device side. The method includes: sending a data packet to a relay device on the source device side so that the data packet is forwarded to the target device through the relay device. Each of a source device, the relay device, and the target device is a UE or an RSU. Optionally, the relay device may be a relay device performing relay forwarding for the source device and discovered by the relay discovery method described above.

Optionally, the data packet includes: control plane signaling or user plane data.

Optionally, the data packet is an Internet Protocol (IP) data packet or a non-IP data packet. The IP data packet is generally a data packet based on an IP address, and the non-IP packet may be a data packet not based on the IP address, e.g., a data packet based on a MAC address, a broadcast data packet, etc.

Optionally, the step of sending the data packet to the relay device includes: sending the data packet to the relay device through a bearer or logical channel for forwarding. Optionally, before the data packet is sent to the relay device through the bearer or logical channel for forwarding, the method further includes: establishing the bearer or logical channel for forwarding with the relay device.

Optionally, the step of establishing the bearer or logical channel for forwarding with the relay device includes: establishing the bearer or logical channel for forwarding with the relay device through signaling interaction of a PC5 interface; or configuring, by a base station, the bearer or logical channel for forwarding for a source device and the relay device through Uu interface radio resource control (RRC) signaling.

Optionally, first relay information is included in headers of media access control (MAC), and/or a radio link control (RLC) protocol and/or a packet data convergence protocol (PDCP) and/or an adapter layer and/or an IP layer of the data packet.

The first relay information includes at least one of: a relay forwarding indication, information about an RSU of the target device, a layer 2 identifier of the target device, an identifier of a target group, an IP address of the target device, a service identifier, a service type, QoS information, information about an RSU of the relay device, a layer 2 identifier of the relay device, an identifier of a group to which the relay device belongs, information about an RSU of a source device, a layer 2 identifier of the source device, an identifier of a group to which the source device belongs, an identifier of a logical channel to which the data packet belongs, an identifier of a bearer to which the data packet belongs, a user plane indication, or a control plane indication.

Optionally, the relay forwarding indication includes at least one of: UE-to-UE relay, UE-to-network relay, UE-to-RSU relay, UE type relay, RSU type relay, layer 2 relay, or layer 3 relay. The QoS information includes at least one of: Prose Per Packet Priority (PPPP) information, QoS Class Identifier (QCI) information, a low delay indication, or a delay requirement indication. The information about the RSU includes at least one of: a service identifier or service type provided by the RSU, an RSU identifier, or an RSU type. The identifier of the logical channel to which the data packet belongs is used for indicating the logical channel between the source device and the target device to which the data packet belongs. The identifier of the bearer to which the data packet belongs is used for indicating the bearer between the source device and the target device to which the data packet belongs.

### Embodiment four

The embodiment provides a relay forwarding method executed on a relay device side. In the embodiment, a data packet sent by a source device is received on the relay device side, and the data packet is forwarded to a target device. Each of the source device, a relay device, and the target device is a UE or an RSU.

Optionally, after the data packet sent by the source device is received, the method further includes: after the data packet is received, determining, according to a bearer or a logical channel to which the data packet belongs, whether the data packet is to be relay forwarded; or determining, by parsing an IP layer header of the data packet, whether the data packet is to be relay forwarded; or determining, by parsing MAC and/or RLC and/or PDCP and/or adapter layer headers of the data packet, whether the data packet is to be relay forwarded.

Optionally, the step of determining, according to the bearer or the logical channel to which the data packet belongs, whether the data packet is to be relay forwarded includes: if the bearer to which the received data packet belongs is a bearer or a logical channel dedicated for forwarding, determining that the data packet is to be relay forwarded.

Optionally, the step of determining, by parsing the IP layer header of the data packet, whether the data packet is to be relay forwarded includes: if a target IP address included in the IP layer header of the data packet is not an IP address of a relay device, determining that the data packet is to be relay forwarded.

Optionally, the step of determining, by parsing the MAC and/or RLC and/or PDCP and/or adapter layer headers of the data packet, whether the data packet is to be relay forwarded includes: if the MAC and/or RLC and/or PDCP and/or adapter layer headers of the data packet includes first relay information, determining that the data packet is to be relay forwarded; or if the MAC and/or RLC and/or PDCP and/or adapter layer headers of the data packet includes the first relay information, determining that the data packet is to be relay forwarded according to the first relay information.

Optionally, before the data packet is forwarded to the target device, the method further includes: acquiring first relay information by parsing information about IP and/or MAC and/or RLC and/or PDCP and/or adapter layer headers of the data packet; and forwarding the data packet to the target device according to the first relay information.

Optionally, the step of forwarding the data packet to the target device includes: MAC and/or RLC and/or PDCP and/or adapter and/or IP layer headers of the data packet sent by a relay device to the target device including second relay information.

The second relay information includes at least one of: a relay forwarding indication, information about an RSU of the target device, a layer 2 identifier of the target device, an identifier of a target group, an IP address of the target device, a service identifier, a service type, QoS information, information about an RSU of the source device, a layer 2 identifier of the source device, an identifier of a group to which the source device belongs, an identifier of a logical channel to which the data packet belongs, an identifier of a bearer to which the data packet belongs, a user plane indication, or a control plane indication.

The identifier of the logical channel to which the data packet belongs is used for indicating the logical channel between the source device and the target device to which the data packet belongs; the identifier of the bearer to which the data packet belongs is used for indicating the bearer between the source device and the target device to which the data packet belongs.

Optionally, the step of forwarding the data packet to the target device includes: sending the data packet to the target device through a bearer or a logical channel dedicated for forwarding.

Optionally, before the data packet is sent to the target device through the bearer or the logical channel dedicated for forwarding, the method further includes: establishing the bearer or the logical channel dedicated for forwarding with the target device.

Optionally, the step of establishing the bearer or the logical channel dedicated for forwarding with the target device includes: establishing the bearer or the logical channel dedicated for forwarding with the target device through signaling interaction of a PC5 interface; or configuring the bearer or the logical channel dedicated for forwarding through configuration information in RRC signaling of a Uu interface from a base station.

Optionally, the step of forwarding the data packet to the target device includes: forwarding the data packet to the target device through a layer 2 forwarding mode or a layer 3 forwarding mode.

According to the above description of the present disclosure, the embodiments of the present disclosure provide a relay discovery method and a relay forwarding method, so that UE-to-UE relay or UE-to-RSU relay can be implemented, and the problem that UE-to-UE relay or UE-to-RSU relay cannot be correctly executed is solved.

### Embodiment five

To facilitate an understanding of the present disclosure, the relay discovery and relay forwarding method of the present disclosure is generally described below.

In the embodiment, a source device may be an RSU or a UE, a relay device may be an RSU or a UE, and a target device may also be an RSU or a UE. The relay type includes UE-to-UE relay, UE-to-network relay, UE-to-RSU relay, UE type relay, RSU type relay, layer 2 relay or layer 3 relay.

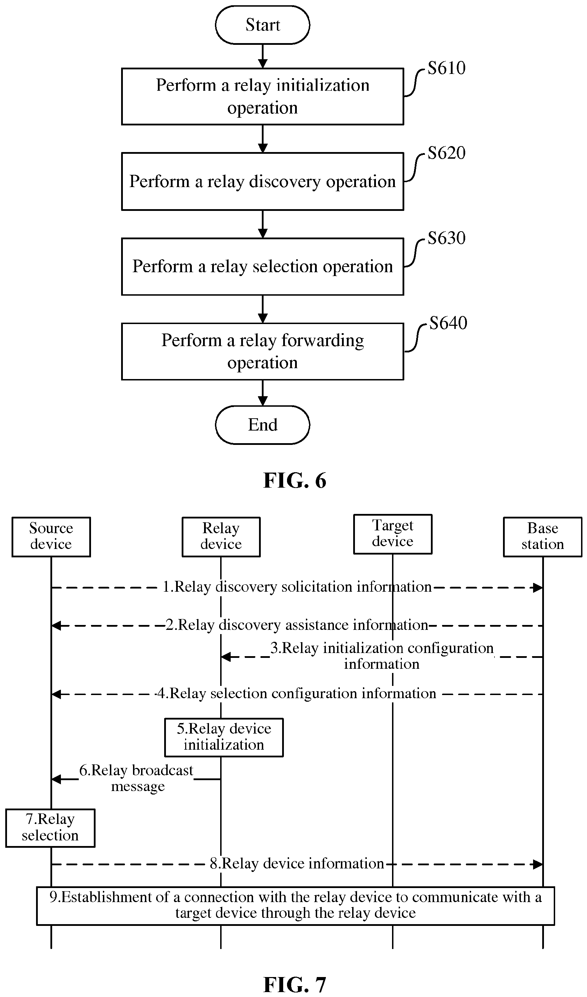

FIG. 6 is a flowchart of a relay discovery and relay forwarding method according to Embodiment five of the present disclosure.

In step S610, a relay initialization operation is performed.

The relay initialization is used for determining whether a UE or an RSU is initialized to be a relay device.

When a device is determined to satisfy a condition for becoming a relay device, the device may be initialized to be a relay device and is subjected to a subsequent relay discovery operation. Optionally, two relay initialization modes below may be used.

Mode 1) UE autonomous relay initialization operation

In a case, the UE acts as a relay for communication between other UEs and the RSU. The UE determines whether a quality of a PC5 link between the UE and the RSU is higher than a second threshold value, and if the quality of the PC5 link is higher than the second threshold value, it is determined that the UE can act as a relay device and can be subjected to the subsequent relay discovery operation. The second threshold value may be configured by a base station or preconfigured.

In a case, the RSU acts as a relay for communication between UEs. The RSU can know the target UE of the UE after the RSU receives a relay discovery solicitation from the UE, and then the RSU may determine whether the quality of a PC5 link between the RSU and the target UE is higher than a third threshold value. If the quality is higher than the third threshold value, it is determined that the RSU can act as a relay device between the UE and the target UE, and is subjected to the subsequent relay discovery operation. At this time, the RSU replies a relay response message to the UE sending the relay discovery solicitation. The third threshold value may be configured by the base station or preconfigured.

Mode 2) Base station-configured relay initialization operation Whether the UE or the RSU acts as a relay device is configured by the base station; or whether the UE or the RSU acts as a relay device is configured in a preconfigured manner.

Optionally, the UE or the RSU may monitor relay pre-broadcast information broadcasted by other devices if the conditions acting as relay devices are met (e.g., the PC5 link quality is higher than a certain threshold value), where the relay pre-broadcast information includes a willingness indication and/or a random value. If the relay pre-broadcast information broadcasted by other devices is not monitored, the relay pre-broadcast information is broadcasted; or if the relay pre-broadcast information broadcasted by other devices is monitored, the relay pre-broadcast information is not broadcasted.

Optionally, the UE or the RSU may monitor relay pre-broadcast information broadcasted by other devices after the relay pre-broadcast information is broadcasted, and is determined to be initialized as a relay device if the random value broadcasted by the local device is greater than the random value broadcasted by the other devices. In step S620, a relay discovery operation is performed.

The relay discovery operation is used for the source device to discover a UE or an RSU that may act as the relay for the source device.

In the embodiment, the Model A or Model B relay discovery operation may be performed.

If the Model A discovery operation is adopted, the RSU or the UE acting as the relay broadcasts and sends a relay broadcast message, and other devices are considered to discover the relay device upon receiving the relay broadcast message. The relay broadcast message may include at least one or a combination of: information about a relay type, information about a layer 2 identifier of a relay device, information about an RSU of the relay device, information about a UE of the relay device, an identifier of a group to which the relay device belongs, information about a UE established a PC5 connection with the relay device, information about an RSU connected to the relay device or quality information about a PC5 link between the relay device and the RSU.

The relay type includes: UE-to-UE relay, UE-to-RSU relay, UE-to-network relay, UE type relay, RSU type relay, layer 2 relay or layer 3 relay. The information about the UE may be a layer 2 identifier or application layer user information. The information about the RSU includes at least one or a combination of: a service identifier or type provided by the RSU, an RSU identifier or an RSU type. The quality information about the PC5 link is an RSRP measurement value of a PC5 interface between the relay device and the RSU.

If the model B discovery operation is adopted, a UE or an RSU (i.e., the source device) which desires to find a relay sends a relay solicitation message, where the relay solicitation message includes one or a combination of: a layer 2 identifier of the source device, a solicited relay type, information about an RSU of a relay device desired to be discovered, information about a UE of the relay device desired to be discovered, information about a target group desired to be discovered, information about a target RSU, information about a target UE, a solicited service identifier, a solicited service type or information about solicited QoS.

A UE or an RSU (i.e., a relay device) that can act as a relay may reply with a relay response message if the relay solicitation message is received. The relay response message may include one or a combination of: a layer 2 identifier of the relay device, information about an RSU of the relay device, an identifier of a group to which the relay device belongs, a relay type, information about a UE established a PC5 connection with the relay device, information about an RSU connected to the relay device, quality information about a PC5 link between the relay device and the target RSU or quality information about a PC5 link between the relay device and the target UE.

Optionally, a source device in the connected state may send relay discovery solicitation information to the base station to solicit the base station to assist the source device in performing a relay discovery operation. Optionally, the relay discovery solicitation information may include one or a combination of: information about a position where the source device is located, relay discovery indication information, information about a solicited relay type, a solicited service identifier, a solicited service type, information about solicited QoS, information about a target RSU, information about a target UE or information about a target group. The information about the position where the source device is located may include one or a combination of: a cell identifier, a zone identifier (zone ID) or geographical position information. Then, the base station sends relay discovery assistance information to the source device according to the relay discovery solicitation information from the source device. The relay discovery assistance information includes at least one or a combination of: information about an RSU of the relay device, information about a UE of the relay device, an identifier of a group to which the relay device belongs, information about a PC5 resource used for relay discovery or information about a PC5 resource used for communicating with the relay device. The source device may perform the relay discovery operation according to the relay discovery assistance information after the relay discovery assistance information sent by the base station is received.

In step S630, a relay selection operation is performed.

The relay selection operation is used for selecting a relay device acting as a relay for the source device after the relay discovery operation is performed. In the embodiment, one relay device may be selected in such a manner that the source device autonomously selects a relay, or in such a manner that the base station assists in the selection. The UE is taken as an example for description as follows.

When the manner that the UE autonomously selects a relay is adopted, the UE autonomously selects a suitable relay device so as to perform relay forwarding for the UE through the selected relay device.

The suitable relay device needs to satisfy one or a combination of the following conditions.
1) A quality of a PC5 link between the UE and the relay device is higher than a first threshold value, and the first threshold value may be configured by a network side network element or pre-configured.
2) The UE determines that a PC5 connection has been established between the relay device and a target RSU and/or a target UE.
3) The UE determines that the relay device is a member of a target group of the UE.

If a plurality of relay devices meeting the above conditions exist, the UE selects a relay device having a highest quality of a PC5 link between the relay device and the UE as the relay device.

When the manner that the base station assists in the selection is adopted, the UE may send relay selection solicitation information to the base station so that the network side network element designates a relay device to perform relay forwarding for the source device. The relay selection solicitation information includes one or a combination of: information about a geographical position where the UE is located, a relay solicitation indication, a solicited relay type, a solicited service identifier, a solicited service type, information about solicited QoS, information about a target RSU, information about a target UE, information about a target group, information about an RSU of a relay device, information about a UE of the relay device or quality information about a PC5 link between the UE and each relay device. After receiving the relay selection solicitation information, the base station selects a device acting as a relay for the UE, and sends the information about the selected relay device to the UE. The information about the selected relay device includes at least one of: a layer 2 identifier of the relay UE, user information about the relay UE, an RSU identifier of the relay UE, a discovery identifier of the relay UE, or a group identifier of the relay UE.

In step S640, a relay forwarding operation is performed.

After the UE selects a relay device for relaying and forwarding, the UE establishes a PC5 connection with the relay device and performs relay forwarding through the relay device to communicate with other UEs or RSUs.

The relay device may use several relay forwarding modes described below.

Layer 2 forwarding After receiving the data packet, the relay device parses the data packet through a layer 2 (including a MAC/RLC/PDCP layer/an adaptation layer) and determines that the data packet needs to be relay forwarded, obtains information about the target to which the data packet is to be forwarded, performs relay forwarding processing at the layer 2, and forwards the data packet to one or more target devices.

2) Layer 3 (IP layer) forwarding After receiving the data packet, the relay device parses the data packet through the layer 3 (IP layer) and determines that the data packet needs to be relay forwarded, obtains the IP address of the target device to which the data packet is to be forwarded, performs relay forwarding processing at the IP layer, and forwards the data packet to one or more target devices.

3) Application layer forwarding After receiving the data packet, the relay device parses the data packet through the application layer and determines that the data packet needs to be relay forwarded, and forwards the data packet to one or more target devices.

With further optional embodiments, the steps of performing relay discovery and selection by the source device in the present disclosure are optionally described below. A source device may be an RSU or a UE, a relay device may be an RSU or a UE, and a target device may also be an RSU or a UE. The relay type includes: UE-to-UE relay, UE-to-network relay, UE-to-RSU relay, UE type relay, RSU type relay, layer 2 relay or layer 3 relay.

### Embodiment six

The embodiment describes method 1 for a source device to discover and select a relay device.

FIG. 7 is a timing diagram illustrating steps for relay discovery and selection according to Embodiment six of the present disclosure.

In step 1, the source device desires to communicate with the target device through the relay device, and optionally, the source device sends relay discovery solicitation information to the base station so as to solicit the base station to assist the source device in performing a relay discovery operation.

The relay discovery solicitation information includes one or a combination of: information about a position where the source device is located, relay discovery indication information, information about a solicited relay type, a solicited service identifier, a solicited service type, information about solicited QoS, information about a target RSU, information about a target UE or information about a target group.

The information about the position where the source device is located may include one or a combination of: a cell identifier, a zone identifier (zone ID), or geographical position information. The relay type includes: UE-to-UE relay, UE-to-RSU relay, UE-to-network relay, UE type relay, RSU type relay, layer 2 relay or layer 3 relay.

The information about the UE may be a layer 2 identifier or application layer user information. The information about the RSU may include one or a combination of: an RSU identifier, an RSU type, or a service identifier or type provided by the RSU. The QoS information includes at least one of: PPPP information, QCI information, a low delay indication, or a delay requirement indication.

The source device may send relay discovery solicitation information, such as a measurement report message and a sidelink UE information message, to the base station through an RRC message or a MAC control element (MAC CE).

In step 2, the base station sends relay discovery assistance information to the UE according to the relay discovery solicitation information from the UE.

The relay discovery assistance information includes one or a combination of: information about a relay discovery model, information about an RSU of the relay device, information about a UE of the relay device, an identifier of a group to which the relay device belongs, information about a PC5 resource used for relay discovery or information about a PC5 resource used for communicating with the relay device. The information about the relay discovery model includes: Model A and/or Model B. In step 3, the base station sends relay initialization configuration information to the relay device.

The relay initialization configuration information is used for the relay device to determine when to be subjected to a relay initialization operation so as to become a relay device and be subjected to a subsequent relay discovery operation.

Optionally, the relay initialization configuration information includes one or more PC5 link quality threshold values. The PC5 link quality threshold value is a quality threshold value of a PC5 link between the RSU and/or the target UE. For example, the relay initialization configuration information includes a second threshold value and a third threshold value.

Optionally, the relay initialization configuration information may also be preconfigured in the relay device.

It is to be noted that in the embodiment, step 3 is performed before step 5 in execution time.

In step 4, the base station sends relay selection configuration information to the source device.

The relay selection configuration information is used for the source device to select the relay device.

Optionally, the relay selection configuration information includes: a PC5 link quality threshold value, a relay selection model and reporting indication information. The relay selection model includes at least one of: UE autonomous selection or base station assisted selection. The reporting indication information is used for indicating whether the UE sends relay selection solicitation information.

It is to be noted that in the embodiment, step 4 is performed before step 7 in execution time.

In step 5, the RSU or the UE is subjected to the relay initialization operation, i.e., it is determined whether the RSU or the UE satisfies the condition of acting as a relay device, and if the condition is satisfied, the RSU or the UE works as the relay device and is subjected to a subsequent relay discovery operation.

Optionally, the RSU or the UE may perform the determination based on the following criterion.
1) If a quality of a PC5 link between a local device and the RSU is higher than a preset second threshold value, the local device is initialized as a relay device, where the second threshold value may be configured by a network side network element or preconfigured.
2) Alternatively, if a quality of a PC5 link between the local device and the target device of the source device is higher than a preset third threshold value, the local device is initialized as the relay device, where the third threshold value may be configured by the network side network element or preconfigured.

Optionally, the RSU or the UE monitors relay pre-broadcast information broadcasted by other devices before being initialized as a relay device. Optionally, the relay pre-broadcast information includes a relay willingness indication and/or a random value. If the relay pre-broadcast information broadcasted by other devices is not monitored by the RSU or the UE, the relay pre-broadcast information is broadcasted; if the relay pre-broadcast information broadcasted by other devices is monitored, the relay pre-broadcast information is not broadcasted and the RSU or the UE does not act as the relay device. The RSU or the UE broadcasts the relay pre-broadcast information and then continues to monitor the relay pre-broadcast information broadcasted by other devices. If the relay pre-broadcast information broadcasted by other devices is monitored and the random value broadcasted by the local device is larger than the random values broadcasted by other devices, the RSU or the UE is determined to be initialized as the relay device.

In step 6, the relay device performs the Model A relay discovery process and broadcasts and sends a relay broadcast message.

The relay broadcast message includes at least one or a combination of: information about a relay type, information about a layer 2 identifier of a relay device, information about an RSU of the relay device, information about a UE of the relay device, an identifier of a group to which the relay device belongs, information about a UE established a PC5 connection with the relay device, information about an RSU connected to the relay device, or quality information about a PC5 link between the relay device and the RSU.

The relay type includes: UE-to-UE relay, UE-to-RSU relay, UE-to-network relay, UE type relay, RSU type relay, layer 2 relay or layer 3 relay. The information about the UE may be a layer 2 identifier or application layer user information. The information about the RSU may include one or a combination of: a service identifier or type provided by the RSU, an RSU identifier or an RSU type. The quality information about the PC5 link is a RSRP measurement value of a PC5 interface between the relay device and the RSU.

In step 7, if the source device receives the relay broadcast message sent by the relay device, the relay device is considered to be discovered.

If the relay device sending the relay broadcast message satisfies at least one of the following conditions, the source device considers the discovered relay device to be a suitable relay device.
1) A quality of a PC5 link between the source device and the relay device is higher than a first threshold value, and the first threshold value may be configured by a network side network element or pre-configured.
2) The source device determines that a PC5 connection has been established between the relay device and a target RSU and/or a target UE of the source device.
3) The source device determines that the relay device is a member of a target group of the source device.

The source device autonomously selects a suitable relay device from the discovered relay devices to act as a relay device for relay forwarding for the source device, and if a plurality of relay devices satisfying the above conditions exist, the source device selects a relay device with the highest quality of the PC5 link between the source device and the relay device to act as the relay device.

In step 8, the source device selects a suitable relay device, and then sends information about the selected relay device to the base station.

The information about the selected relay device includes at least one of: a layer 2 identifier of the relay UE, user information about the relay UE, an RSU identifier of the relay UE, a discovery identifier of the relay UE, or a group identifier of the relay UE.

It is to be noted that in the embodiment, step 8 may be performed before or after step 9.

In step 9, the source device selects the suitable relay device and then establishes a PC5 connection with the relay device and performs relay forwarding through the relay device to communicate with other UEs or RSUs.

### Embodiment seven

The embodiment describes method 2 for a source device to discover and select a relay device.

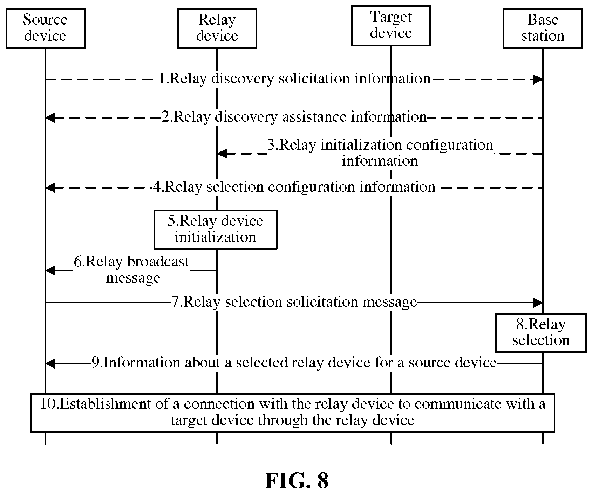

FIG. 8 is a timing diagram illustrating steps for relay discovery and selection according to Embodiment seven of the present disclosure.

In step 1, the source device desires to communicate with a target device through the relay device, and optionally, the source device sends relay discovery solicitation information to a base station so as to solicit the base station to assist the source device in performing a relay discovery operation.

In step 2, the base station sends relay discovery assistance information to the UE according to the relay discovery solicitation information from the UE.

In step 3, the base station sends relay initialization configuration information to the relay device.

It is to be noted that in the embodiment, step 3 is performed before step 5 in execution time.

In step 4, the base station sends relay selection configuration information to the source device.

It is to be noted that in the embodiment, step 4 is performed before step 7 in execution time.

In step 5, an RSU or the UE is subjected to the relay initialization operation, i.e., it is determined whether the RSU or the UE satisfies the condition of acting as a relay device, and if the condition is satisfied, the RSU or the UE works as the relay device and is subjected to a subsequent relay discovery operation.

In step 6, the relay device performs the Model A relay discovery operation and broadcasts and sends a relay broadcast message.

In step 7, if the source device receives the relay broadcast message sent by the relay device, the relay device is considered to be discovered, the source device sends a relay selection solicitation message to the base station, and information about the discovered relay device is reported to the base station, so that the base station selects a suitable relay device for the source device.

The relay selection solicitation information includes one or a combination of: information about a position where the source device is located, relay discovery indication information, information about a solicited relay type, a solicited service identifier, a solicited service type, information about solicited QoS, information about a target RSU, information about a target UE, or information about a target group.

The information about the position where the source device is located may include one or a combination of: a cell identifier, a zone identifier (zone ID) or geographical position information.

In step 8, the base station selects a suitable relay device for the source device according to the relay selection solicitation information received from the source device. Optionally, the base station may select a relay device suitable for performing relay forwarding for the source device from relay devices reported by the source device.

In step 9, the base station sends the information about the selected relay device to the source device.

The information about the selected relay device includes at least one of: a layer 2 identifier of the relay UE, user information about the relay UE, an RSU identifier of the relay UE, a discovery identifier of the relay UE, or a group identifier of the relay UE.

In step 10, the source device receives the information about the relay device for relay forwarding selected by the base station for the source device and then establishes a PC5 connection with the relay device and performs relay forwarding through the relay device to communicate with other UEs or RSUs.

### Embodiment eight

The embodiment describes method 3 for a source device to discover and select a relay device.

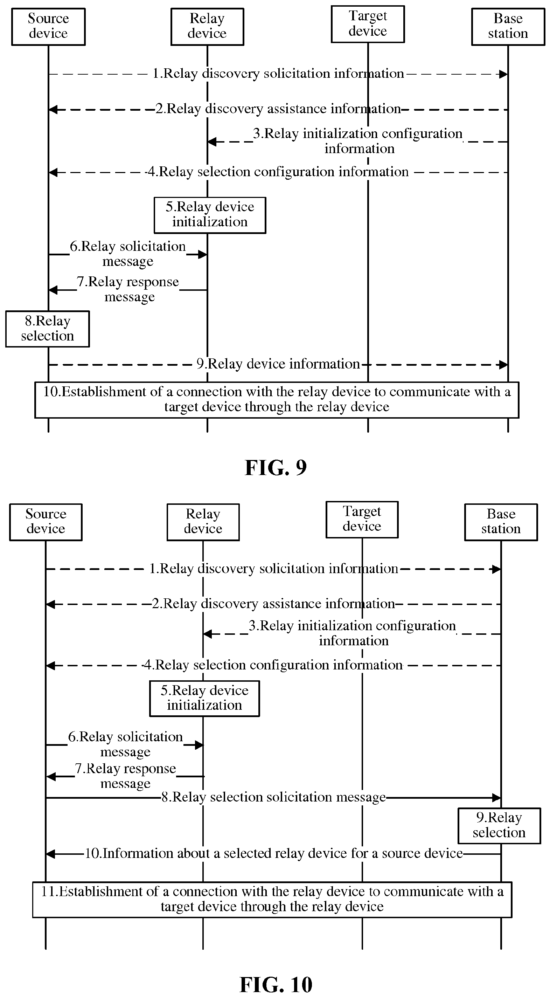

FIG. 9 is a timing diagram illustrating steps for relay discovery and selection according to Embodiment eight of the present disclosure.

In step 1, the source device desires to communicate with a target device through the relay device, and optionally, the source device sends relay discovery solicitation information to a base station so as to solicit the base station to assist the source device in performing a relay discovery operation.

In step 2, the base station sends relay discovery assistance information to the UE according to the relay discovery solicitation information from the UE.

In step 3, the base station sends relay initialization configuration information to the relay device.

It is to be noted that in the embodiment, step 3 is performed before step 5 in execution time.

In step 4, the base station sends relay selection configuration information to the source device.

It is to be noted that in the embodiment, step 4 is performed before step 8 in execution time.

In step 5, an RSU or the UE is subjected to the relay initialization operation, i.e., it is determined whether the RSU or the UE satisfies the condition of acting as a relay device, and if the condition is satisfied, the RSU or the UE works as the relay device and is subjected to a subsequent relay discovery operation.

In step 6, the source device performs a Model B relay discovery operation, i.e., the source device broadcasts and sends a relay solicitation message.

The relay solicitation message includes one or a combination of: a layer 2 identifier of the source device, a solicited relay type, information about an RSU of a relay device desired to be discovered, information about a UE of the relay device desired to be discovered, information about a target group desired to be discovered, information about a target RSU, information about a UE of a target device, a solicited service identifier, a solicited service type, or information about solicited QoS.

In step 7, the relay device receives the relay solicitation message, and after the relay device is determined to act as a relay for the source device, the relay device replies to the source device with a relay response message.

Optionally, the relay device is determined to act as the relay for the source device if one of the following conditions is satisfied.
1) If a quality of a PC5 link between the source device and the relay device is higher than a fourth threshold value, and the fourth threshold value may be configured by a network side network element or preconfigured.
2) A PC5 connection is determined to have been established between the relay device and a target RSU or a target UE of the source device.
3) The relay device is determined to be a member of a target group of the source device.

The relay response message with which the relay device replies may include one or a combination of: a layer 2 identifier of the relay device, information about an RSU of the relay device, an identifier of a group to which the relay device belongs, a relay type, information about a UE established a PC5 connection with the relay device, information about an RSU connected to the relay device, quality information about a PC5 link between the relay device and the target RSU or quality information about a PC5 link between the relay device and the target UE.

In step 8, if the source device receives the relay response message sent by the relay device, the relay device is considered to be discovered.

The source device autonomously selects a suitable device to act as a relay. The device capable of acting as the relay needs to satisfy one or a combination of the following conditions.
1) A quality of a PC5 link between the source device and the relay device is higher than a first threshold value, and the first threshold value may be configured by a network side network element or pre-configured.
2) A PC5 connection is determined to have been established between the relay device and a target RSU and/or a target UE of the source device.
3) The relay device is determined to be a member of a target group of the source device.

If a plurality of relay devices meeting the above conditions exist, the source device selects a relay device having a highest quality of a PC5 link between the relay device and the source device as the relay device.

In step 9, the source device selects a suitable relay device, and then sends information about the selected relay device to the base station.

The information about the selected relay device includes at least one of: a layer 2 identifier of the relay UE, user information about the relay UE, an RSU identifier of the relay UE, a discovery identifier of the relay UE, or a group identifier of the relay UE.

It is to be noted that in the embodiment, step 9 may be performed before or after step 10.

In step 10, the source device selects the suitable relay device and then establishes a PC5 connection with the relay device and performs relay forwarding through the relay device to communicate with other UEs or RSUs.

### Embodiment nine

The embodiment describes method 4 for a source device to discover and select a relay device.

FIG. 10 is a timing diagram illustrating steps for relay discovery and selection according to Embodiment nine of the present disclosure.

In step 1, the source device desires to communicate with a target device through the relay device, and optionally, the source device sends relay discovery solicitation information to a base station so as to solicit the base station to assist the source device in performing a relay discovery operation.

In step 2, the base station sends relay discovery assistance information to the UE according to the relay discovery solicitation information from the UE.

In step 3, the base station sends relay initialization configuration information to the relay device.

It is to be noted that in the embodiment, step 3 is performed before step 5 in execution time.

In step 4, the base station sends relay selection configuration information to the source device.

It is to be noted that in the embodiment, step 4 is performed before step 7 in execution time.

In step 5, an RSU or the UE is subjected to the relay device initialization process, i.e., it is determined whether the RSU or the UE satisfies the condition of acting as a relay device, and if the condition is satisfied, the RSU or the UE works as the relay device and is subjected to a subsequent relay discovery operation.

In step 6, the source device performs a Model B relay discovery operation, i.e., the source device broadcasts and sends a relay solicitation message.

In step 7, the relay device receives the relay solicitation message, and after the relay device is determined to act as a relay for the source device, the relay device replies to the source device with a relay response message.

In step 8, if the source device receives the relay response message sent by the relay device, the relay device is considered to be discovered, the source device sends a relay selection solicitation message to the base station, and information about the discovered relay device is reported to the base station, so that the base station selects a relay device for the source device.

In step 9, the base station selects a suitable relay device for the source device according to the relay selection solicitation information from the source device. Optionally, the base station may select a relay device suitable for performing relay forwarding for the source device from relay devices reported by the source device. In step 10, the base station sends the information about the selected relay device to the source device.

In step 11, the source device receives the information about the relay device for relay forwarding selected by the base station for the source device and then establishes a PC5 connection with the relay device and performs relay forwarding through the relay device to communicate with other UEs or RSUs.

### Embodiment ten

The embodiment describes method 1 for a source device to perform relay forwarding through a relay UE.

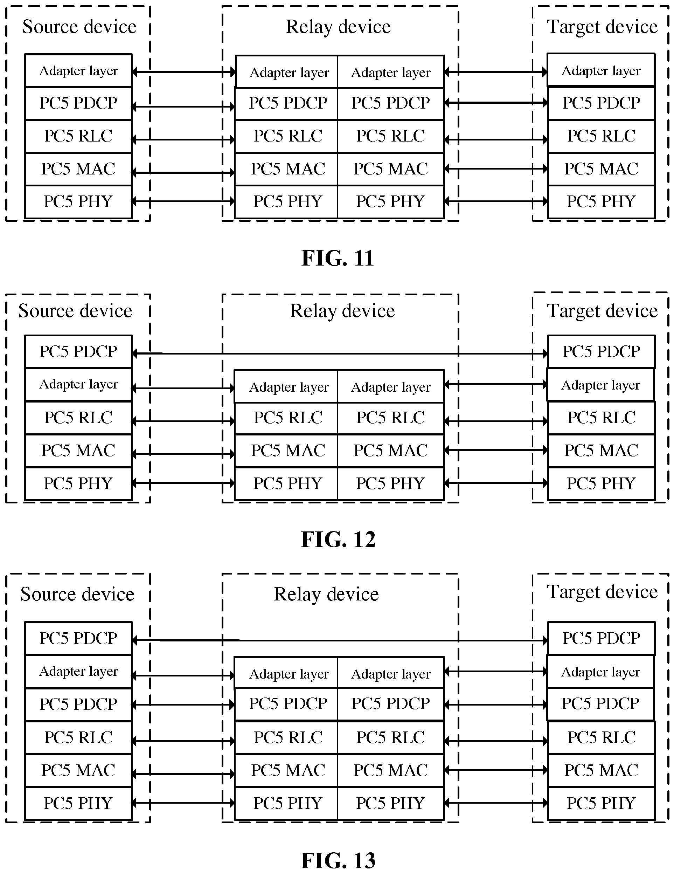

In the embodiment, a protocol stack from the source device to a target device is as shown in FIG. 11.

The source device may be an RSU or a UE, the relay device may be an RSU or a UE, and the target device may also be an RSU or a UE. The RSU may be a UE type RSU or an eNB type RSU, that is, when the source device or the relay device or the target device is an RSU, the RSU may be the UE type RSU or the eNB type RSU.

The protocol stack between the source device and the relay device includes: an Adapter layer, and PC5 Packet Data Convergence Protocol (PDCP), PC5 Radio Link Control (RLC), PC5 Media Access Control (MAC) and PC5 physical layer (PHY) layers.

The protocol stack between the relay device and the target device includes: an Adapter layer, and PC5 PDCP, PC5 RLC, PC5 MAC and PC5 PHY layers.

In the embodiment, a data packet of the source device is forwarded to the target device through layer 2 of the relay device, and an adapter layer for relay forwarding exists above the PC5 PDCP. A hop by hop (two-segment) PDCP mode is adopted between the source device and the target device.

It is to be noted that the Adapter layer between the relay device and the target device is optional. In addition, in the embodiment, the data packet sent by the source device to the target device may be an IP data packet or a non-IP data packet, i.e., IP layers may or may not exist above the Adapter layers of the source device and the target device.

In the embodiment, the main steps of performing relay forwarding by the relay device are as follows.

In step 1, a higher layer of a source device generates a data packet to be sent to a target device, and if the data packet is an IP data packet, the data packet is delivered to an Adapter layer after being processed by the IP layer. If the data packet is a non-IP data packet, the data packet is delivered directly to the Adapter layer without being processed by the IP layer. An Adapter layer header is added when the Adapter layer of the source device encapsulates the data packet, where the Adapter layer header includes first relay information.

The first relay information may include one or a combination of: a relay forwarding indication, information about an RSU of the target device, a layer 2 identifier of the target device, an identifier of a target group, an IP address of the target device, a service identifier, a service type, QoS information, information about an RSU of the relay device, a layer 2 identifier of the relay device, an identifier of a group to which the relay device belongs, information about an RSU of a source device, a layer 2 identifier of the source device, an identifier of a group to which the source device belongs, an identifier of a logical channel to which the data packet belongs, an identifier of a bearer to which the data packet belongs, a user plane indication or a control plane indication.

The relay forwarding indication includes at least one of: UE-to-UE relay, UE-to-network relay, UE-to-RSU relay, UE type relay, RSU type relay, layer 2 relay, or layer 3 relay.

The QoS information includes one or a combination of: PPPP information, QCI information, a low delay indication or a delay requirement indication.

The information about the RSU includes one or a combination of: a service identifier or type provided by the RSU, an RSU identifier or an RSU type.

The identifier of the logical channel to which the data packet belongs is used for indicating the logical channel between the source device and the target device to which the data packet belongs; the identifier of the bearer to which the data packet belongs is used for indicating the bearer between the source device and the target device to which the data packet belongs.

In step 2, the data packet is delivered to the PC5 PDCP layer after being processed by the Adapter layer. The PC5 PDCP layer of the source device processes and encapsulates the data packet, and optionally, relay forwarding indication information is added into the PDCP header when the PC5 PDCP layer of the source device encapsulates the data packet.

The source device may send a data packet required to be forwarded to the relay device through a bearer or a logical channel dedicated for forwarding, or the data packet of the source device that is required to be forwarded may not be sent to the relay device through the bearer or the logical channel dedicated for forwarding.

In a case where the source device sends the data packet required to be forwarded to the relay device through the bearer or the logical channel dedicated for forwarding, the bearer or the logical channel dedicated for forwarding needs to be established between the source device and the relay device. Optionally, the bearer or the logical channel dedicated for forwarding may be established between the source device and the relay device through signaling interaction of the PC5 interface, or the base station configures the bearer or the logical channel dedicated for forwarding for the source device and the relay device through RRC signaling of the Uu interface.

In step 3, the source device continues to perform PC5 RLC, PC5 MAC and PC5 PHY layer processing and encapsulation on the data packet, and then sends the data packet to the relay device through the PC5 interface.

In step 4, after receiving the data packet sent by the source device, the relay device performs PC5 PHY, PC5 MAC, PC5 RLC, PC5 PDCP and adapter layer parsing on the data packet and determines whether the data packet needs to be forwarded.

The relay device may determine whether the data packet needs to be relay forwarded in several ways described below.
1) The relay device determines that the data packet needs to be relay forwarded according to the bearer or the logical channel to which the received data packet belongs. Optionally, if the bearer to which the received data packet belongs is a bearer or a logical channel dedicated for forwarding, the relay device determines that the data packet needs to be relay forwarded.
2) The relay device determines that the data packet needs to be relay forwarded by parsing MAC and/or RLC and/or PDCP and/or adapter layer headers of the received data packet. Optionally, if the MAC and/or RLC and/or PDCP and/or adapter layer headers of the data packet include first relay information, the relay device determines that the data packet needs to be relay forwarded; or if the MAC and/or RLC and/or PDCP and/or adapter layer headers of the data packet include the first relay information and the first relay information indicates that the data packet needs to be relay forwarded, it is determined that the data packet needs to be relay forwarded.

In step 5, the relay device acquires the first relay information by parsing MAC and/or RLC and/or PDCP and/or adapter layer header information of the received data packet to be forwarded, and determines a target device to which the data packet is to be forwarded according to the first relay information, and then forwards the data packet to the target device.

Optionally, the relay device may determine the target device to which the data packet is to be forwarded through one of the following information included in the first relay information: information about an RSU of the target device, a layer 2 identifier of the target device, an identifier of a target group, an IP address of the target device, a service identifier, a service type, or QoS information.

The target device to which the data packet is to be forwarded may be a UE (or an RSU), or a group of UEs (or RSUs) or a plurality of UEs (or RSUs).

In step 6, the relay device performs PC5 PDCP, PC5 RLC, PC5 MAC and PC5 PHY layer processing and encapsulation on the data packet respectively.

Optionally, before this, the relay device performs adapter layer processing and encapsulation on the data packet. The relay device sets second relay information in MAC and/or RLC and/or PDCP and/or adapter layer headers of the data packet to be forwarded to the target device.

The second relay information includes one or a combination of: a relay forwarding indication, information about an RSU of the target device, a layer 2 identifier of the target device, an identifier of a target group, an IP address of the target device, a service identifier, a service type, QoS information, information about an RSU of the source device, a layer 2 identifier of the source device, an identifier of a group to which the source device belongs, an identifier of a logical channel to which the data packet belongs, an identifier of a bearer to which the data packet belongs, a user plane indication or a control plane indication.

The relay forwarding indication includes at least one of: UE-to-UE relay, UE-to-network relay, UE-to-RSU relay, UE type relay, RSU type relay, layer 2 relay, or layer 3 relay.

The QoS information includes one or a combination of: PPPP information, QCI information, a low delay indication or a delay requirement indication.

The information about the RSU includes one or a combination of: an RSU identifier, an RSU type or a service identifier or type provided by the RSU.

The identifier of the logical channel to which the data packet belongs is used for indicating the logical channel between the source device and the target device to which the data packet belongs; the identifier of the bearer to which the data packet belongs is used for indicating the bearer between the source device and the target device to which the data packet belongs.

In step 7, the relay device forwards the data packet received from the source device to the target device by means of unicast communication or broadcast communication or multicast communication.

The relay device may send the data packet that the source device needs to forward to the target device through the bearer or the logical channel dedicated for forwarding. In this case, the bearer or the logical channel dedicated for forwarding needs to be established between the relay device and the target device. Optionally, the bearer or the logical channel dedicated for forwarding may be established between the relay device and the target device through signaling interaction of the PC5 interface, or the base station may configure the bearer or the logical channel dedicated for forwarding for the relay device and the target device through RRC signaling of the Uu interface. In addition, the data packet of the source device required to be forwarded may also not be sent to the target device through the bearer or the logical channel dedicated for forwarding.

The PC5 bearer or logical channel between the source device and the relay device may be in one-to-one mapping relationship with the PC5 bearer or logical channel between the relay device and the target device; or the relay device may multiplex data packets of multiple PC5 bearers or logical channels of the source device in the same PC5 bearer or logical channel and send the data packets to the target device; or the relay device may multiplex data packets of multiple PC5 bearers or logical channels of multiple source devices in the same PC5 bearer or logical channel and send the data packets to the target device.

In step 8, after receiving the data packet of the source device forwarded by the relay device, the target device performs PC5 PHY, PC5 MAC, PC5 RLC, PC5 PDCP and adapter layer parsing on the data packet respectively. The adapter layer parsing is optional.

### Embodiment eleven

The embodiment describes method 2 for a source device to perform route forwarding through a relay UE.

In the embodiment, a protocol stack from the source device to a target device is as shown in FIG. 12.

In the embodiment, the source device may be an RSU or a UE, the relay device may be an RSU or a UE, and the target device may also be an RSU or a UE. The RSU may be a UE type RSU or an eNB type RSU.

The protocol stack between the source device and the relay device includes: an Adapter layer, and PC5 RLC, PC5 MAC and PC5 PHY layers.

The protocol stack between the relay device and the target device includes: an Adapter layer, and PC5 RLC, PC5 MAC and PC5 PHY layers.

In the embodiment, a data packet of the source device is forwarded to the target device through layer 2 of the relay device, and an adapter layer for relay forwarding exists below the PC5 PDCP and above the PC5 RLC. An end to end PDCP mode is adopted between the source device and the target device.

In the embodiment, the data packet sent by the source device to the target device may be an IP data packet or a non-IP data packet, i.e., IP layers may or may not exist above the PDCP layers of the source device and the target device.

In the embodiment, the main steps of performing relay forwarding by the relay device are as follows.

In step 1, a higher layer of a source device generates a data packet to be sent to a target device, and if the data packet is an IP data packet, the data packet is delivered to a PC5 PDCP layer after being processed by an IP layer. If the data packet is a non-IP data packet, the data packet is delivered directly to the PC5 PDCP layer without being processed by the IP layer. Then, the source device delivers the data packet that needs to be forwarded through the relay device to the Adapter layer. An Adapter layer header is added when the source device performs the Adapter layer encapsulation on the data packet, where the Adapter layer header includes first relay information.

In step 2, the source device may send the data packet required to be forwarded to the relay device through a bearer or a logical channel dedicated for forwarding, and in such a case, the bearer or the logical channel dedicated for forwarding needs to be established between the source device and the relay device. In addition, the data packet of the source device required to be forwarded may also not be sent to the relay device through the bearer or the logical channel dedicated for forwarding.

In step 3, the data packet is delivered to the PC5 RLC layer after being processed by the Adapter layer, and the source device subsequently performs PC5 RLC, PC5 MAC and PC5 PHY layer processing and encapsulation on the data packet and then sends the data packet to the relay device through the PC5 interface.

In step 4, after receiving the data packet sent by the source device, the relay device respectively performs PC5 PHY, PC5 MAC, PC5 RLC and adapter layer parsing on the data packet and determines whether the data packet needs to be forwarded.

The relay device may determine whether the data packet needs to be relay forwarded in several ways described below.
1) The relay device determines that the data packet needs to be relay forwarded according to the bearer or the logical channel to which the received data packet belongs. Optionally, if the bearer to which the received data packet belongs is a bearer or a logical channel dedicated for forwarding, the relay device determines that the data packet needs to be relay forwarded.
2) The relay device determines that the data packet needs to be relay forwarded by parsing MAC and/or RLC and/or adapter layer headers of the received data packet. Optionally, if the MAC and/or RLC and/or adapter layer headers of the data packet include first relay information, the relay device determines that the data packet needs to be relay forwarded; or if the MAC and/or RLC and/or adapter layer headers of the data packet include the first relay information and the first relay information indicates that the data packet needs to be relay forwarded, it is determined that the data packet needs to be relay forwarded.

In step 5, the relay device acquires the first relay information by parsing MAC and/or RLC and/or adapter layer header information of the received data packet to be forwarded, and determines a target device to which the data packet is to be forwarded according to the first relay information, and then forwards the data packet to the target device.

In step 6, the relay device performs PC5 RLC, PC5 MAC and PC5 PHY layer processing and encapsulation on the data packet respectively. The relay device includes second relay information in MAC and/or RLC and/or adapter layer headers of the data packet to be forwarded to the target device.

In step 7, the relay device forwards the data packet received from the source device to the target device by means of unicast communication or broadcast communication or multicast communication.

The relay device may send the data packet of the source device required to be forwarded to the target device through a bearer or a logical channel dedicated for forwarding, and in such a case, the bearer or the logical channel dedicated for forwarding needs to be established between the relay device and the target device. In addition, the data packet of the source device required to be forwarded may also not be sent to the target device through the bearer or the logical channel dedicated for forwarding.

The PC5 bearer or logical channel between the source device and the relay device may be in one-to-one mapping relationship with the PC5 bearer or logical channel between the relay device and the target device; or the relay device may multiplex data packets of multiple PC5 bearers or logical channels of the source device in the same PC5 bearer or logical channel and send the data packets to the target device; or the relay device may multiplex data packets of multiple PC5 bearers or logical channels of multiple source devices in the same PC5 bearer or logical channel and send the data packets to the target device.

In step 8, after receiving the data packet of the source device forwarded by the relay device, the target device performs PC5 PHY, PC5 MAC, PC5 RLC and adapter layer parsing on the data packet respectively. The target device may parse the adapter layer header of the data packet to obtain the second relay information included therein, and determine the source end (i.e., the source device) of the data packet and/or the bearer or logical channel between the source device and the target device to which the data packet belongs. The target device delivers the data packet to a PC5 PDCP entity corresponding to the corresponding bearer or logical channel of the source device for further parsing and processing.

### Embodiment twelve

The embodiment describes method 3 for a source device to perform route forwarding through a relay UE.

In the embodiment, a protocol stack from the source device to a target device is as shown in FIG. 13.

The source device may be an RSU or a UE, the relay device may be an RSU or a UE, the target device may also be an RSU or a UE, and the RSU may be a UE type RSU or an eNB type RSU.

The protocol stack between the source device and the relay device includes: an Adapter layer, and PC5 PDCP, PC5 RLC, PC5 MAC and PC5 PHY layers.

The protocol stack between the relay device and the target device includes: an Adapter layer, and PC5 PDCP, PC5 RLC, PC5 MAC and PC5 PHY layers.

In the embodiment, the data packet of the source device is forwarded to the target device through layer 2 of the relay device, the source device performs two-layer PC5 PDCP layer processing on the data packet to be forwarded, the target device performs two-layer PC5 PDCP layer parsing processing on the received forwarded data packet, and an adapter layer for relay forwarding exists between the two PC5 PDCP layers. An end-to-end PDCP and a hop by hop PDCP exist between the source device and the target device.

In the embodiment, the data packet sent by the source device to the target device may be an IP data packet or a non-IP data packet, i.e., IP layers may or may not exist above the PDCP layers of the source device and the target device.

In the embodiment, the main steps of performing relay forwarding by the relay device are as follows.

In step 1, a higher layer of a source device generates a data packet to be sent to a target device, and if the data packet is an IP data packet, the data packet is delivered to a PC5 PDCP layer above an Adapter layer after being processed by an IP layer. If the data packet is a non-IP data packet, the data packet is delivered directly to the PC5 PDCP layer above the Adapter layer without being processed by the IP layer. Then, the source device delivers the data packet that needs to be forwarded through the relay device to the Adapter layer. An Adapter layer header is added when the source device performs Adapter layer encapsulation on the data packet, where the Adapter layer header includes first relay information.

In step 2, the source device may send the data packet required to be forwarded to the relay device through a bearer or a logical channel dedicated for forwarding. In this case, the bearer or the logical channel dedicated for forwarding needs to be established between the source device and the relay device. In addition, the data packet of the source device required to be forwarded may also not be sent to the relay device through the bearer or the logical channel dedicated for forwarding.

In step 3, the data packet is delivered to the PC5 PDCP layer below the Adapter layer after being processed by the Adapter layer, and the source device subsequently performs PC5 PDCP, PC5 RLC, PC5 MAC and PC5 PHY layer processing and encapsulation on the data packet and then sends the data packet to the relay device through the PC5 interface.

In step 4, after receiving the data packet sent by the source device, the relay device performs PC5 PHY, PC5 MAC, PC5 RLC, PC5 PDCP and adapter layer parsing on the data packet respectively and determines whether the data packet needs to be forwarded.

The relay device may determine whether the data packet needs to be relay forwarded in several ways described below.
1) The relay device determines that the data packet needs to be relay forwarded according to the bearer or the logical channel to which the received data packet belongs; optionally, if the bearer to which the received data packet belongs is a bearer or a logical channel dedicated for forwarding, the relay device determines that the data packet needs to be relay forwarded.
2) The relay device determines that the data packet needs to be relay forwarded by parsing MAC and/or RLC and/or PDCP and/or adapter layer headers of the received data packet. Optionally, if the MAC and/or RLC and/or PDCP and/or adapter layer headers of the data packet include first relay information, the relay device determines that the data packet needs to be relay forwarded; or if the MAC and/or RLC and/or PDCP and/or adapter layer headers of the data packet include the first relay information and the first relay information indicates that the data packet needs to be relay forwarded, it is determined that the data packet needs to be relay forwarded.

In step 5, the relay device acquires the first relay information by parsing MAC and/or RLC and/or PDCP and/or adapter layer header information of the received data packet to be forwarded, and determines a target device to which the data packet is to be forwarded according to the first relay information, and then forwards the data packet to the target device.

In step 6, the relay device performs adapter, PC5 PDCP, PC5 RLC, PC5 MAC and PC5 PHY layer processing and encapsulation on the data packet respectively. The relay device includes second relay information in MAC and/or RLC and/or PDCP and/or adapter layer headers of the data packet to be forwarded to the target device. In step 7, the relay device forwards the data packet received from the source device to the target device by means of unicast communication or broadcast communication or multicast communication.

The relay device may send the data packet of the source device required to be forwarded to the target device through a bearer or a logical channel dedicated for forwarding, and in such a case, the bearer or the logical channel dedicated for forwarding needs to be established between the relay device and the target device. In addition, the data packet of the source device required to be forwarded may also not be sent to the target device through the bearer or the logical channel dedicated for forwarding.

The PC5 bearer or logical channel between the source device and the relay device may be in one-to-one mapping relationship with the PC5 bearer or logical channel between the relay device and the target device; or the relay device may multiplex data packets of multiple PC5 bearers or logical channels of the source device in the same PC5 bearer or logical channel and send the data packets to the target device; or the relay device may multiplex data packets of multiple PC5 bearers or logical channels of multiple source devices in the same PC5 bearer or logical channel and send the data packets to the target device.

In step 8, after receiving the data packet of the source device forwarded by the relay device, the target device performs PC5 PHY, PC5 MAC, PC5 RLC, PC5 PDCP and adapter layer parsing on the data packet respectively.

The target device may parse the adapter layer header of the data packet to obtain the second relay information included therein, and determine the source end (i.e., the source device) of the data packet and/or the bearer or logical channel between the source device and the target device to which the data packet belongs. The target device delivers the data packet to a PC5 PDCP entity corresponding to the corresponding bearer or logical channel of the source device for further parsing and processing.

### Embodiment thirteen

The embodiment describes method 4 for a source device to perform route forwarding through a relay UE.

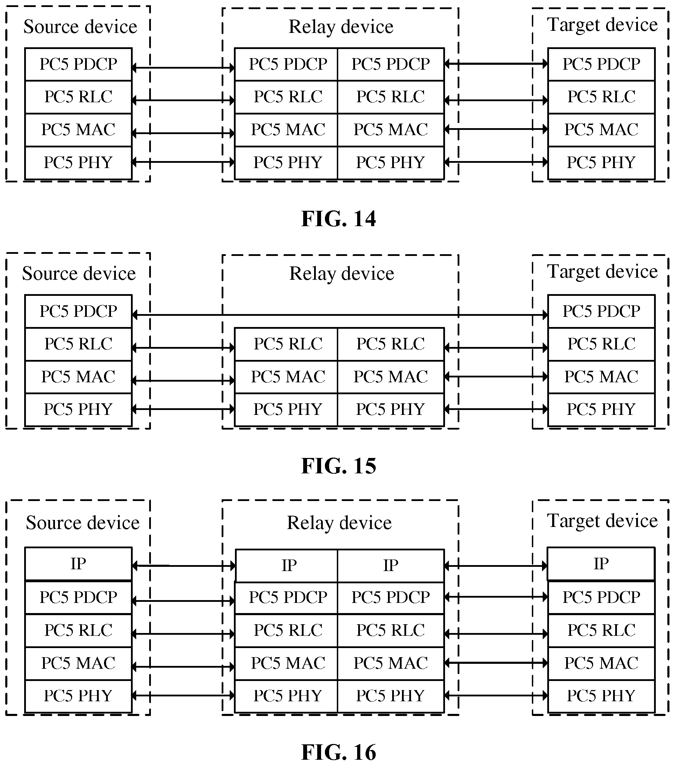

In the embodiment, a protocol stack from the source device to a target device is as shown in FIG. 14.

The source device may be an RSU or a UE, the relay device may be an RSU or a UE, the target device may also be an RSU or a UE, and the RSU may be a UE type RSU or an eNB type RSU.

The protocol stack between the source device and the relay device includes: PC5 PDCP, PC5 RLC, PC5 MAC and PC5 PHY layers.

The protocol stack between the relay device and the target device includes: PC5 PDCP, PC5 RLC, PC5 MAC and PC5 PHY layers.

In the embodiment, the data packet of the source device is forwarded to the target device through layer 2 of the relay device. A hop by hop PDCP mode is adopted between the source device and the target device.

In the embodiment, the data packet sent by the source device to the target device may be an IP data packet or a non-IP data packet, i.e., IP layers may or may not exist above the PDCP layers of the source device and the target device.

In the embodiment, the main steps of performing relay forwarding by the relay device are as follows.

In step 1, a higher layer of a source device generates a data packet to be sent to a target device, and if the data packet is an IP data packet, the data packet is delivered to a PC5 PDCP layer after being processed by an IP layer. If the data packet is a non-IP data packet, the data packet is delivered directly to the PC5 PDCP layer without being processed by the IP layer. Corresponding headers are added when PC5 PDCP and/or PC5 RLC and/or PC5 MAC layers of the source device encapsulate the data packet respectively, where the PC5 PDCP and/or PC5 RLC and/or PC5 MAC headers include first relay information.

In step 2, the source device sends the data packet required to be forwarded to the relay device through a bearer or a logical channel dedicated for forwarding. In this case, the bearer or the logical channel dedicated for forwarding needs to be established between the source device and the relay device. Optionally, the bearer or the logical channel dedicated for forwarding may be established between the source device and the relay device through signaling interaction of the PC5 interface, or the base station configures the bearer or the logical channel dedicated for forwarding for the source device and the relay device through RRC signaling of the Uu interface. In addition, the data packet of the source device required to be forwarded may also not be sent to the relay device through the bearer or the logical channel dedicated for forwarding.

In step 3, after receiving the data packet sent by the source device, the relay device performs PC5 PHY, PC5 MAC, PC5 RLC and PC5 PDCP layer parsing on the data packet respectively and determines whether the data packet needs to be forwarded.

The relay device may determine whether the data packet needs to be relay forwarded in several ways described below.
1) The relay device determines that the data packet needs to be relay forwarded according to the bearer or the logical channel to which the received data packet belongs. Optionally, if the bearer to which the received data packet belongs is a bearer or a logical channel dedicated for forwarding, the relay device determines that the data packet needs to be relay forwarded.
2) The relay device determines that the data packet needs to be relay forwarded by parsing MAC and/or RLC and/or PDCP sub-layer headers of the received data packet. Optionally, if the MAC and/or RLC and/or PDCP sub-layer headers of the data packet include first relay information, the relay device determines that the data packet needs to be relay forwarded; or if the MAC and/or RLC and/or PDCP sub-layer headers of the data packet include the first relay information and the first relay information indicates that the data packet needs to be relay forwarded, it is determined that the data packet needs to be relay forwarded.

In step 4, the relay device acquires the first relay information by parsing MAC and/or RLC and/or PDCP sub-layer header information of the received data packet to be forwarded, and determines a target device to which the data packet is to be forwarded according to the first relay information, and then forwards the data packet to the target device.

In step 5, the relay device performs PC5 PDCP, PC5 RLC, PC5 MAC and PC5 PHY layer processing and encapsulation on the data packet respectively. The relay device includes second relay information in MAC and/or RLC and/or PDCP headers of the data packet to be forwarded to the target device.

In step 6, the relay device forwards the data packet received from the source device to the target device by means of unicast communication or broadcast communication or multicast communication.

The relay device may send the data packet of the source device required to be forwarded to the target device through a bearer or a logical channel dedicated for forwarding, and in such a case, the bearer or the logical channel dedicated for forwarding needs to be established between the relay device and the target device. In addition, the data packet of the source device required to be forwarded may also not be sent to the target device through the bearer or the logical channel dedicated for forwarding.

The PC5 bearer or logical channel between the source device and the relay device may be in one-to-one mapping relationship with the PC5 bearer or logical channel between the relay device and the target device; or the relay device may multiplex data packets of multiple PC5 bearers or logical channels of the source device in the same PC5 bearer or logical channel and send the data packets to the target device; or the relay device may multiplex data packets of multiple PC5 bearers or logical channels of multiple source devices in the same PC5 bearer or logical channel and send the data packets to the target device.

In step 7, after receiving the data packet of the source device forwarded by the relay device, the target device performs PC5 PHY, PC5 MAC, PC5 RLC and PC5 PDCP layer parsing on the data packet respectively, and delivers the data packet to the higher layer for processing.

### Embodiment fourteen

The embodiment describes method 5 for a source device to perform route forwarding through a relay UE.

In the embodiment, a protocol stack from the source device to a target device is as shown in FIG. 15.

The source device may be an RSU or a UE, the relay device may be an RSU or a UE, the target device may also be an RSU or a UE, and the RSU may be a UE type RSU or an eNB type RSU.

The protocol stack between the source device and the relay device includes: PC5 RLC, PC5 MAC and PC5 PHY layers.

The protocol stack between the relay device and the target device includes: PC5 RLC, PC5 MAC and PC5 PHY layers.

In the embodiment, a data packet of the source device is forwarded to the target device through layer 2 of the relay device, and an end to end PDCP mode is adopted between the source device and the target device.

In the embodiment, the data packet sent by the source device to the target device may be an IP data packet or a non-IP data packet, i.e., IP layers may or may not exist above the PDCP layers of the source device and the target device.

In the embodiment, the main steps of performing relay forwarding by the relay device are as follows.

In step 1, a higher layer of a source device generates a data packet to be sent to a target device, and if the data packet is an IP data packet, the data packet is delivered to a PC5 PDCP layer after being processed by an IP layer. If the data packet is a non-IP data packet, the data packet is delivered directly to the PC5 PDCP layer without being processed by the IP layer. Then, the source device delivers the data packet that needs to be forwarded through the relay device to the PC5 RLC layer. Corresponding headers are added when the source device subsequently performs PC5 RLC, PC5 MAC and PC5 PHY layer encapsulation on the data packet respectively, where the headers include first relay information.

In step 2, the source device may send the data packet required to be forwarded to the relay device through a bearer or a logical channel dedicated for forwarding, and in such a case, the bearer or the logical channel dedicated for forwarding needs to be established between the source device and the relay device. In addition, the data packet of the source device required to be forwarded may also not be sent to the relay device through the bearer or the logical channel dedicated for forwarding.

In step 3, after receiving the data packet sent by the source device, the relay device performs PC5 PHY, PC5 MAC and PC5 RLC layer parsing on the data packet respectively and determines whether the data packet needs to be forwarded.

The relay device may determine whether the data packet needs to be relay forwarded in several ways described below.
1) The relay device determines that the data packet needs to be relay forwarded according to the bearer or the logical channel to which the received data packet belongs; optionally, if the bearer to which the received data packet belongs is a bearer or a logical channel dedicated for forwarding, the relay device determines that the data packet needs to be relay forwarded.
2) The relay device determines that the data packet needs to be relay forwarded by parsing MAC and/or RLC layer headers of the received data packet. Optionally, if the MAC and/or RLC layer headers of the data packet include first relay information, the relay device determines that the data packet needs to be relay forwarded; or if the MAC and/or RLC sub-layer headers of the data packet include the first relay information and the first relay information indicates that the data packet needs to be relay forwarded, it is determined that the data packet needs to be relay forwarded.

In step 4, the relay device acquires the first relay information by parsing MAC and/or RLC sub-layer header information of the received data packet to be forwarded, and determines a target device to which the data packet is to be forwarded according to the first relay information, and then forwards the data packet to the target device.

In step 5, the relay device performs PC5 RLC, PC5 MAC and PC5 PHY layer processing and encapsulation on the data packet respectively. The relay device includes second relay information in MAC and/or RLC headers of the data packet to be forwarded to the target device.

In step 6, the relay device forwards the data packet received from the source device to the target device by means of unicast communication or broadcast communication or multicast communication.

The relay device may send the data packet of the source device required to be forwarded to the target device through a bearer or a logical channel dedicated for forwarding, and in such a case, the bearer or the logical channel dedicated for forwarding needs to be established between the relay device and the target device. In addition, the data packet of the source device required to be forwarded may also not be sent to the target device through the bearer or the logical channel dedicated for forwarding.

The PC5 bearer or logical channel between the source device and the relay device may be in one-to-one mapping relationship with the PC5 bearer or logical channel between the relay device and the target device; or the relay device may multiplex data packets of multiple PC5 bearers or logical channels of the source device in the same PC5 bearer or logical channel and send the data packets to the target device; or the relay device may multiplex data packets of multiple PC5 bearers or logical channels of multiple source devices in the same PC5 bearer or logical channel and send the data packets to the target device.

In step 7, after receiving the data packet of the source device forwarded by the relay device, the target device performs PC5 PHY, PC5 MAC and PC5 RLC layer parsing on the data packet respectively.

The target device may parse the PC5 PHY, PC5 MAC and PC5 RLC layer headers of the data packet to obtain the second relay information included therein, and determine the source end (i.e., the source device) of the data packet and/or the bearer or logical channel between the source device and the target device to which the data packet belongs. The target device delivers the data packet to a PC5 PDCP entity corresponding to the corresponding bearer or logical channel of the source device for further parsing and processing.

### Embodiment fifteen

The embodiment describes method 6 for a source device to perform route forwarding through a relay UE.

In the method of the embodiment, a protocol stack from the source device to a target device is as shown in FIG. 16.

The source device may be an RSU or a UE, the relay device may be an RSU or a UE, the target device may also be an RSU or a UE, and the RSU may be a UE type RSU or an eNB type RSU.

The protocol stack between the source device and the relay device includes: an IP layer, and PC5 PDCP, PC5 RLC, PC5 MAC and PC5 PHY layers.

The protocol stack between the relay device and the target device includes: an IP layer, and PC5 PDCP, PC5 RLC, PC5 MAC and PC5 PHY layers.

In the embodiment, the data packet of the source device is forwarded to the target device through layer 3 of the relay device. A hop by hop PDCP mode is adopted between the source device and the target device.

In the embodiment, the data packet sent by the source device to the target device is an IP data packet.

In the embodiment, the main steps of performing relay forwarding by the relay device are as follows.

In step 1, a higher layer of a source device generates a data packet to be sent to a target device, and when the source device performs IP layer encapsulation and processing on the data packet, a destination address field in an IP header is set to be the IP address of the target device.

In step 2, the source device may send the data packet required to be forwarded to the relay device through a bearer or a logical channel dedicated for forwarding, and in such a case, the bearer or the logical channel dedicated for forwarding needs to be established between the source device and the relay device. In addition, the data packet of the source device required to be forwarded may also not be sent to the relay device through the bearer or the logical channel dedicated for forwarding.

In step 2, the data packet is delivered to the PC5 PDCP layer after being processed by the IP layer. The PC5 PDCP layer of the source device processes and encapsulates the data packet, and optionally, relay forwarding indication information is added into the PDCP header when the PC5 PDCP layer of the source device encapsulates the data packet.

In step 3, the source device continues to perform PC5 RLC, PC5 MAC and PC5 PHY layer processing and encapsulation on the data packet, and then sends the data packet to the relay device through the PC5 interface.

In step 4, after receiving the data packet sent by the source device, the relay device performs PC5 PHY, PC5 MAC, PC5 RLC, PC5 PDCP and IP layer parsing on the data packet respectively.

The relay device determines whether the data packet needs to be forwarded through the IP layer parsing. Optionally, if the layer 2 target address in the MAC layer header of the data packet is the relay device but the target IP address of the IP layer is not the relay device, the relay device determines that the data packet needs to be forwarded to a target device whose IP address is the target IP address.

Optionally, the relay device saves a mapping table of the IP address and the layer 2 identifier of a device established a PC5 connection with the relay device, and queries the mapping table to obtain the layer 2 identifier of the target device.

In step 5, the relay device performs IP, PC5 PDCP, PC5 RLC, PC5 MAC and PC5 PHY layer processing and encapsulation on the data packet respectively.

In step 6, the relay device forwards the data packet received from the source device to the target device by means of unicast communication or broadcast communication or multicast communication.

The relay device may send the data packet that the source device needs to forward to the target device through the bearer or the logical channel dedicated for forwarding. In this case, the bearer or the logical channel dedicated for forwarding needs to be established between the relay device and the target device. In addition, the data packet of the source device required to be forwarded may also not be sent to the target device through the bearer or the logical channel dedicated for forwarding.

The PC5 bearer or logical channel between the source device and the relay device may be in one-to-one mapping relationship with the PC5 bearer or logical channel between the relay device and the target device; or the relay device may multiplex data packets of multiple PC5 bearers or logical channels of the source device in the same PC5 bearer or logical channel and send the data packets to the target device; or the relay device may multiplex data packets of multiple PC5 bearers or logical channels of multiple source devices in the same PC5 bearer or logical channel and send the data packets to the target device.

In step 7, after receiving the data packet of the source device forwarded by the relay device, the target device performs PC5 PHY, PC5 MAC, PC5 RLC, PC5 PDCP and IP layer parsing on the data packet respectively.

### Embodiment sixteen

The embodiment provides a source device. The source device is a UE or an RSU.

In the embodiment, the source device includes a processor and a memory; the processor is configured to execute relay discovery programs stored in the memory to implement the relay discovery methods in Embodiment one and Embodiment five to Embodiment nine.

### Embodiment seventeen

The embodiment provides a relay device. The relay device is a UE or an RSU.

In the embodiment, the relay device includes a processor and a memory; the processor is configured to execute relay discovery programs stored in the memory to implement the relay discovery methods in Embodiment two and Embodiment five to Embodiment nine.

### Embodiment eighteen

The embodiment provides another source device. The source device is a UE or an RSU.

In the embodiment, the source device includes a processor and a memory; the processor is configured to execute relay forwarding programs stored in the memory to implement the relay forwarding methods in Embodiment three and Embodiment ten to Embodiment sixteen.

### Embodiment nineteen

The embodiment provides another relay device. The relay device is a UE or an RSU. In the embodiment, the relay device includes a processor and a memory; the processor is configured to execute relay forwarding programs stored in the memory to implement the relay forwarding methods in Embodiment four and Embodiment ten to Embodiment sixteen.

### Embodiment twenty

The embodiment provides a storage medium, which is configured to store one or more programs executable by one or more processors to implement relay discovery methods in Embodiment one and Embodiment five to Embodiment nine.

### Embodiment twenty-one

The embodiment provides a storage medium, which is configured to store one or more programs executable by one or more processors to implement relay discovery methods in Embodiment two and Embodiment five to Embodiment nine.

### Embodiment twenty-two

The embodiment provides a storage medium, which is configured to store one or more programs executable by one or more processors to implement relay forwarding methods in Embodiment three and Embodiment ten to Embodiment sixteen.

### Embodiment twenty-three

The embodiment provides a storage medium, which is configured to store one or more programs executable by one or more processors to implement relay forwarding methods in Embodiment four and Embodiment ten to Embodiment sixteen.

Although the preferred embodiments of the present disclosure have been disclosed for illustrative purposes, those skilled in the art will appreciate that various additions and substitutions are possible, and accordingly, the scope of the present disclosure should not be limited to the embodiments set forth above.

### INDUSTRIAL APPLICABILITY

In the present disclosure, firstly, a relay discovery operation is performed, so that a relay device capable of relaying a data packet is discovered, and then the discovered relay device is used to relay the data packet of a source device to a target device, so that on one hand, a transmission range is expanded through relay transmission of the relay device, and the relay device can rapidly perform relaying and transmission by using a set of effective relay mechanisms, so that transmission efficiency is ensured; with the relay device discovered through the relay discovery operation, the relaying can be ensured to be smoothly performed, so that the problem that the relaying cannot be performed or the relaying fails to be performed due to the fact that a device is directly selected for relaying but the device for relaying rejects the relaying or the relaying is unsuccessful is solved, which is characterized by high relaying success rate, has a positive effect, is simple and convenient to implement, and can be widely applied to the industry.

## Claims

1. A relay discovery method, executed on a source device side and comprising:
performing a relay discovery operation (S620) to discover a relay device, wherein the relay device is configured to forward a data packet of a source device to a target device;
wherein each of the source device, the relay device, and the target device is a user equipment, UE, or a road side unit, RSU,
wherein the performing the relay discovery operation comprises:
performing a Model A relay discovery operation; wherein the Model A relay discovery operation comprises:
monitoring relay broadcast information broadcasted by the relay device;
wherein the relay broadcast information comprises:
information about a relay type and information about a UE that has established a PC5 connection with the relay device;
wherein the information about the relay type comprises: RSU type relay, layer 2 relay or layer 3 relay; and
wherein the information about the UE comprises an application layer user information.

2. The method of claim 1, wherein the relay broadcast information further comprises at least one of:
, information about a layer 2 identifier of the relay device, information about a UE of the relay device, or an identifier of a group to which the relay device belongs.

3. The method of claim 1, wherein before the performing the relay discovery operation, the method further comprises:
receiving relay discovery assistance information sent by a network side network element, wherein the network side network element comprises a base station, a mobility management entity, MME, a Vehicle-to-Everything Communications, V2X, functional entity, a V2X server or an application server;
wherein the relay discovery assistance information comprises at least one of:
information about a relay discovery model, information about an RSU of the relay device, information about a UE of the relay device, an identifier of a group to which the relay device belongs, information about a PC5 resource used for relay discovery, or information about a PC5 resource used for communicating with the relay device;
wherein the information about the relay discovery model comprises: Model A.

4. The method of claim 3, wherein before the receiving the relay discovery assistance information sent by the network side network element, the method further comprises:
sending relay discovery solicitation information to the network side network element;
wherein the relay discovery solicitation information comprises at least one of:
information about a position where the source device is located, relay discovery indication information, information about a solicited relay type, a solicited service identifier, a solicited service type, information about solicited QoS, information about a target RSU, information about a target UE, or information about a target group;
wherein the information about the position where the source device is located comprises at least one of: a cell identifier, a zone identifier, or geographical position information.

5. A relay discovery method, executed on a relay device side and comprising:
performing a relay discovery operation to forward a data packet sent by a source device to a target device; wherein each of the source device, a relay device, and the target device is a user equipment, UE, or a road side unit, RSU,
wherein the performing the relay discovery operation comprises:
performing a Model A relay discovery operation; wherein the Model A relay discovery operation comprises broadcasting relay broadcast information;
wherein a relay broadcast message comprises:
information about a relay type and information about a UE that has established a PC5 connection with the relay device;
wherein the information about the relay type comprises: RSU type relay, layer 2 relay or layer 3 relay; and
wherein the information about the UE comprises an application layer user information.

6. The method of claim 5, wherein before the performing the relay discovery operation, the method further comprises: performing a relay initialization operation; wherein the performing the relay initialization operation comprises:
in response to determining that a quality of a PC5 link between a local device and an RSU is higher than a preset second threshold value, initializing the local device as a relay device, wherein the second threshold value is configured by a network side network element or preconfigured; or
in response to determining that a quality of a PC5 link between the local device and the target device of the source device is higher than a preset third threshold value, initializing the local device as the relay device, wherein the third threshold value is configured by the network side network element or preconfigured.

7. The method of claim 5,
wherein a relay broadcast message further comprises at least one of:
information about a layer 2 identifier of a relay device, information about a UE of the relay device, or an identifier of a group to which the relay device belongs.

## Patentansprüche

1. Quellvorrichtungsseite ausgeführt wird und Folgendes umfasst:
Durchführen einer Relaisentdeckungsoperation (S620), um eine Relaisvorrichtung zu entdecken, wobei die Relaisvorrichtung dazu ausgelegt ist, ein Datenpaket einer Quellvorrichtung zu einer Zielvorrichtung weiterzuleiten;
wobei jede der Quellvorrichtung, der Relaisvorrichtung und der Zielvorrichtung eine Teilnehmereinrichtung, UE, oder eine Straßenrandeinheit, RSU, ist,
wobei das Durchführen der Relaisentdeckungsoperation Folgendes umfasst:
Durchführen einer Relaisentdeckungsoperation Modell A; wobei die Relaisentdeckungsoperation Modell A Folgendes umfasst:
Überwachen von Relaisbroadcastinformationen, die mittels Broadcasting von der Relaisvorrichtung übermittelt werden;
wobei die Relaisbroadcastinformationen Folgendes umfassen:
Informationen über einen Relaistyp und Informationen über eine UE, die eine PC5-Verbindung zur Relaisvorrichtung aufgebaut hat;
wobei die Informationen über den Relaistyp Folgendes umfassen:
Relais Typ RSU, Schicht-2-Relais oder Schicht-3-Relais; und
wobei die Informationen über die UE Anwendungsschichtbenutzerinformationen umfassen.

2. Verfahren nach Anspruch 1,
wobei die Relaisbroadcastinformationen ferner mindestens eines von Folgendem umfassen:
Informationen über eine Schicht-2-Kennung der Relaisvorrichtung, Informationen über eine UE der Relaisvorrichtung oder eine Kennung einer Gruppe, zu der die Relaisvorrichtung gehört.

3. Verfahren nach Anspruch 1, wobei das Verfahren vor dem Durchführen der Relaisentdeckungsoperation ferner Folgendes umfasst:
Empfangen von Relaisentdeckungsunterstützungsinformationen, die von einem netzwerkseitigen Netzwerkelement gesendet werden, wobei das netzwerkseitige Netzwerkelement eine Basisstation, eine Mobilitätsverwaltungsentität, MME, eine Fahrzeug-zu-allem-Kommunikations(V2X)-Funktionsentität, einen V2X-Server oder einen Anwendungsserver umfasst;
wobei die Relaisentdeckungsunterstützungsinformationen mindestens eines von Folgendem umfassen:
Informationen über ein Relaisentdeckungsmodell, Informationen über eine RSU der Relaisvorrichtung, Informationen über eine UE der Relaisvorrichtung, eine Kennung einer Gruppe, zu der die Relaisvorrichtung gehört, Informationen über eine PC5-Ressource, die für eine Relaisentdeckung verwendet wird, oder Informationen über eine PC5-Ressource, die zum Kommunizieren mit der Relaisvorrichtung verwendet wird;
wobei die Informationen über das Relaisentdeckungsmodell Folgendes umfassen: Modell A.

4. Verfahren nach Anspruch 3, wobei das Verfahren vor dem Empfangen der Relaisentdeckungsunterstützungsinformationen, die vom netzwerkseitigen Netzwerkelement gesendet werden, ferner Folgendes umfasst:
Senden von Relaisentdeckungsanforderungsinformationen an das netzwerkseitige Netzwerkelement;
wobei die Relaisentdeckungsanforderungsinformationen mindestens eines von Folgendem umfassen:
Informationen über eine Position, an der sich die Quellvorrichtung befindet, Relaisentdeckungsanzeigeinformationen, Informationen über einen angeforderten Relaistyp, eine angeforderte Dienstkennung, einen angeforderten Diensttyp, Informationen über eine angeforderte QoS, Informationen über eine Ziel-RSU, Informationen über eine Ziel-UE oder Informationen über eine Zielgruppe;
wobei die Informationen über die Position, an der sich die Quellvorrichtung befindet, mindestens eines von Folgendem umfassen: einer Zellkennung, einer Zonenkennung oder geografischen Positionsinformationen.

5. Relaisentdeckungsverfahren, das auf einer Relaisvorrichtungsseite ausgeführt wird und Folgendes umfasst:
Durchführen einer Relaisentdeckungsoperation, um ein Datenpaket, das von einer Quellvorrichtung an eine Zielvorrichtung gesendet wird, weiterzuleiten; wobei jede der Quellvorrichtung, einer Relaisvorrichtung und der Zielvorrichtung eine Teilnehmereinrichtung, UE, oder eine Straßenrandeinheit, RSU, ist,
wobei das Durchführen der Relaisentdeckungsoperation Folgendes umfasst:
Durchführen einer Relaisentdeckungsoperation Modell A; wobei die Relaisentdeckungsoperation Modell A ein Broadcasting von Relaisbroadcastinformationen umfasst;
wobei eine Relaisbroadcastnachricht Folgendes umfasst:
Informationen über einen Relaistyp und Informationen über eine UE, die eine PC5-Verbindung zur Relaisvorrichtung aufgebaut hat;
wobei die Informationen über den Relaistyp Folgendes umfassen: Relais Typ RSU, Schicht-2-Relais oder Schicht-3-Relais; und
wobei die Informationen über die UE Anwendungsschichtbenutzerinformationen umfassen.

6. Verfahren nach Anspruch 5, wobei das Verfahren vor dem Durchführen der Relaisentdeckungsoperation ferner Folgendes umfasst:
Durchführen einer Relaisinitialisierungsoperation;
wobei das Durchführen der Relaisinitialisierungsoperation Folgendes umfasst:
in Reaktion auf das Bestimmen, dass eine Qualität eines PC5-Links zwischen einer lokalen Vorrichtung und einer RSU höher ist als ein voreingestellter zweiter Schwellwert, Initialisieren der lokalen Vorrichtung als eine Relaisvorrichtung, wobei der zweite Schwellwert von einem netzwerkseitigen Netzwerkelement ausgelegt oder vorausgelegt ist; oder
in Reaktion auf das Bestimmen, dass eine Qualität eines PC5-Links zwischen der lokalen Vorrichtung und der Zielvorrichtung der Quellvorrichtung höher ist als ein voreingestellter dritter Schwellwert, Initialisieren der lokalen Vorrichtung als eine Relaisvorrichtung, wobei der dritte Schwellwert vom netzwerkseitigen Netzwerkelement ausgelegt oder vorausgelegt ist.

7. Verfahren nach Anspruch 5,
wobei eine Relaisbroadcastnachricht ferner mindestens eines von Folgendem umfasst:
Informationen über eine Schicht-2-Kennung einer Relaisvorrichtung, Informationen über eine UE der Relaisvorrichtung oder eine Kennung einer Gruppe, zu der die Relaisvorrichtung gehört.

## Revendications

1. Procédé de recherche de relais exécuté sur un côté dispositif source et comprenant :
de réaliser une opération de recherche de relais (S620) pour rechercher un dispositif de relais, dans lequel le dispositif de relais est configuré pour transférer un paquet de données d'un dispositif source à un dispositif cible ;
dans lequel chacun parmi le dispositif source, le dispositif de relais et le dispositif cible est un équipement utilisateur, UE, ou une unité de bord de route, RSU,
dans lequel la réalisation de l'opération de recherche de relais comprend :
de réaliser une opération de recherche de relais de Modèle A ; dans lequel l'opération de recherche de relais de Modèle A comprend :
de surveiller des informations de radiodiffusion de relais diffusées par le dispositif de relais ;
dans lequel les informations de radiodiffusion de relais comprennent :
des informations sur un type de relais et des informations sur un UE qui a établi une connexion PC5 avec le dispositif de relais ;
dans lequel les informations sur le type de relais comprennent : un relai de type RSU, un relai de couche 2 ou un relai de couche 3 ; et
dans lequel les informations sur l'UE comprennent des informations d'utilisateur de couche d'application.

2. Procédé selon la revendication 1,
dans lequel les informations de radiodiffusion de relais comprennent en outre au moins l'un des éléments suivants :
des informations sur un identifiant de couche 2 du dispositif de relais, des informations sur un UE du dispositif de relais ou un identifiant d'un groupe auquel le dispositif de relais appartient.

3. Procédé selon la revendication 1, dans lequel avant la réalisation de l'opération de recherche de relais, le procédé comprend en outre :
de recevoir des informations d'aide à la recherche de relais envoyées par un élément de réseau côté réseau, dans lequel l'élément de réseau côté réseau comprend une station de base, une entité de gestion de la mobilité, MME, une entité fonctionnelle de communication de véhicule à X, V2X, un serveur V2X ou un serveur d'application ;
dans lequel les informations d'aide à la recherche de relais comprennent au moins l'un des éléments suivants :
des informations sur un modèle de recherche de relais, des informations sur une RSU du dispositif de relais, des informations sur un UE du dispositif de relais, un identifiant d'un groupe auquel le dispositif de relais appartient, des informations sur une ressource PC5 utilisée pour la recherche de relais ou des informations sur une ressource PC5 utilisée pour communiquer avec le dispositif de relais ;
dans lequel les informations sur le modèle de recherche de relais comprennent : le Modèle A.

4. Procédé selon la revendication 3, dans lequel, avant la réception des informations d'aide à la recherche de relais envoyées par l'élément de réseau côté réseau, le procédé comprend en outre :
d'envoyer des informations de sollicitation de recherche de relais à l'élément de réseau côté réseau ;
dans lequel les informations de sollicitation de recherche de relais comprennent au moins l'un des éléments suivants :
des informations sur une position où le dispositif source est situé, des informations d'indication de recherche de relais, des informations sur un type de relais sollicité, un identifiant de service sollicité, un type de service sollicité, des informations sur une QoS sollicitée, des informations sur une RSU cible, des informations sur un UE cible ou des informations sur un groupe cible ;
dans lequel les informations sur la position où le dispositif source est situé comprennent au moins l'un des éléments suivants : un identifiant de cellule, un identifiant de zone ou des informations de position géographique.

5. Procédé de recherche de relais exécuté sur un côté dispositif de relais et comprenant :
de réaliser une opération de recherche de relais pour transférer un paquet de données envoyé par un dispositif source à un dispositif cible ; dans lequel chacun parmi le dispositif source, un dispositif de relais et le dispositif cible est un équipement utilisateur, UE, ou une unité de bord de route, RSU,
dans lequel la réalisation de l'opération de recherche de relais comprend :
de réaliser une opération de recherche de relais de Modèle A ; dans lequel l'opération de recherche de relais de Modèle A comprend de diffuser des informations de radiodiffusion de relais ;
dans lequel un message de radiodiffusion de relais comprend :
des informations sur un type de relais et des informations sur un UE qui a établi une connexion PC5 avec le dispositif de relais ;
dans lequel les informations sur le type de relais comprennent : un relai de type RSU, un relai de couche 2 ou un relai de couche 3 ; et
dans lequel les informations sur l'UE comprennent des informations d'utilisateur de couche d'application.

6. Procédé selon la revendication 5, dans lequel, avant la réalisation de l'opération de recherche de relais, le procédé comprend en outre :
de réaliser une opération d'initialisation de relais ; dans lequel la réalisation de l'opération d'initialisation de relais comprend :
en réponse à la détermination du fait qu'une qualité d'une liaison PC5 entre un dispositif local et une RSU est supérieure à une deuxième valeur seuil prédéfinie, d'initialiser le dispositif local comme un dispositif de relais, dans lequel la deuxième valeur seuil est configurée par un élément de réseau côté réseau ou est préconfigurée ; ou
en réponse à la détermination du fait qu'une qualité d'une liaison PC5 entre le dispositif local et le dispositif cible du dispositif source est supérieure à une troisième valeur seuil prédéfinie, d'initialiser le dispositif local comme dispositif de relais, dans lequel la troisième valeur seuil est configurée par l'élément de réseau côté réseau ou est préconfigurée.

7. Procédé selon la revendication 5,
dans lequel un message de radiodiffusion de relais comprend en outre au moins l'un des éléments suivants :
des informations sur un identifiant de couche 2 d'un dispositif de relais, des informations sur un UE du dispositif de relais ou un identifiant d'un groupe auquel le dispositif de relais appartient.
